# EUROPEAN PATENT APPLICATION

(11) **EP 4 675 938 A1**
(43) Date of publication of application: **07.01.2026**
(21) Application number: 24763875.2
(22) Date of filing: 27.02.2024
(51) Int. Cl.: H04B 7/08, H04B 7/06, H04W 16/28, H04W 72/231

(54) **TERMINAL, WIRELESS COMMUNICATION METHOD, AND BASE STATION**

(30) Priority: 28.02.2023 JP 2023029598
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2024/006934
(87) International publication number: WO 2024/181395

(57) **Abstract**

Even when cell switching is performed, communication is appropriately performed. A terminal according to one aspect of the present disclosure includes a receiving section that receives a Medium Access Control Control Element (MAC CE) related to cell switching, and a control section that controls, based on information included in the MAC CE, application of a transmission configuration indication (TCI) state for a specific cell. The MAC CE includes information related to a TCI state pool for a serving cell or a candidate cell.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, radio communication systems later than Rel. 17/5G), it is assumed to control communication using a plurality of transmission/reception points (for example, a multi-TRP (MTRP) in a serving cell or control communication based on mobility among a plurality of cells (inter-cell mobility)/intra-cell mobility (inter-cell mobility) including a non-serving cell.

In cell switching, a beam/TCI state for a target candidate cell can be indicated by using a MAC CE for a cell switch command. Thus, it is required that a TCI state (or beam index) for each candidate cell is configured by higher layer signaling before the cell switch command is received, and furthermore, the MAC CE is active.

In this case, it is unclear how a TCI state pool (TCI state configuration) for each candidate cell is configured and activated for many candidate cells (which can be configured as a current serving cell and a candidate cell, and include inactive SCells). Unless these are clear, appropriate control of cell switching may fail, which may cause communication quality degradation.

The present disclosure has been made in view of this respect, and has an object to provide a terminal, a radio communication method, and a base station that can appropriately perform communication even when cell switching is performed.

### Solution to Problem

A terminal according to one aspect of the present disclosure includes a receiving section that receives a Medium Access Control Control Element (MAC CE) related to cell switching, and a control section that controls, based on information included in the MAC CE, application of a transmission configuration indication (TCI) state for a specific cell. The MAC CE includes information related to a TCI state pool for a serving cell or a candidate cell.

### Advantageous Effects of Invention

According to one aspect of the present disclosure, even when cell switching is performed, communication can be appropriately performed.

### Brief Description of Drawings

[FIG. 1] FIG. 1A to FIG. 1D are diagrams to show examples of multi-TRPs.
[FIG. 2] FIG. 2A and FIG. 2B are diagrams to show examples of inter-cell mobility.
[FIG. 3] FIG. 3A and FIG. 3B are diagrams to show examples of switching between a serving cell and an additional cell by L1/L2 signaling.
[FIG. 4] FIG. 4 is a diagram to show an example of configuration examples 1 to 3 when candidate cells are supported.
[FIG. 5] FIG. 5A to FIG. 5C are diagrams to show examples of a case where switching between candidate cells/a candidate cell group by L1/L2 signaling is performed in configuration examples 1 to 3 when candidate cells are supported.
[FIG. 6] FIG. 6 is a diagram to show an example of timing advance groups (TAGs) to which cells included in a cell group belong.
[FIG. 7] FIG. 7 is a diagram to show an example of a MAC CE for timing advance command.
[FIG. 8] FIGS. 8A and 8B are diagrams to show examples of a TAG ID configured for a serving cell and a candidate cell.
[FIG. 9] FIG. 9 is a diagram to show an outline of L1L2-triggered mobility (LTM).
[FIG. 10] FIG. 10 is a diagram to show a PDCCH indication-based RACH (PDCCH ordered RACH) with random access response (RAR) monitoring for serving cell.
[FIG. 11] FIG. 11 is a diagram to show a PDCCH indication-based RACH (PDCCH ordered RACH) without random access response (RAR) monitoring for serving cell.
[FIG. 12] FIGS. 12A and 12B are diagrams to show examples of a unified/common TCI framework.
[FIG. 13] FIGS. 13A and 13B are diagrams to show examples of DCI based TCI state indication.
[FIG. 14] FIG. 14 is a diagram to show an example of a unified TCI state activation/deactivation MAC CE.
[FIG. 15] FIGS. 15A to 15D are diagrams to show examples of a TCI state pool according to a first embodiment.
[FIG. 16] FIGS. 16A to 16B are diagrams to show examples of a TCI state pool according to a second embodiment.
[FIG. 17] FIGS. 17A to 17D are diagrams to show examples of a TCI state pool according to the second embodiment.
[FIG. 18] FIG. 18 is a diagram to show an example of a TCI state pool according to case 1 of the present disclosure.
[FIG. 19] FIG. 19 is a diagram to show an example of a TCI state pool according to case 2 of the present disclosure.
[FIG. 20] FIG. 20 is a diagram to show an example of a TCI state pool according to case 3 of the present disclosure.
[FIG. 21] FIG. 21 is a diagram to show an example of a TCI state pool according to case 4 of the present disclosure.
[FIG. 22] FIG. 22 is a diagram to show an example of a TCI state pool according to case 5 of the present disclosure.
[FIG. 23] FIG. 23 is a diagram to show an example of a TCI state pool according to case 6 of the present disclosure.
[FIG. 24] FIG. 24 is a diagram to show an example of a TCI state pool according to case 7 of the present disclosure.
[FIG. 25] FIG. 25 is a diagram to show an example of a schematic structure of a radio communication system according to one embodiment.
[FIG. 26] FIG. 26 is a diagram to show an example of a structure of a base station according to one embodiment.
[FIG. 27] FIG. 27 is a diagram to show an example of a structure of a user terminal according to one embodiment.
[FIG. 28] FIG. 28 is a diagram to show an example of a hardware structure of the base station and the user terminal according to one embodiment.
[FIG. 29] FIG. 29 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be used interchangeably with sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Multi-TRP)

In NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID (for example, a PCI), or may be a virtual cell ID.

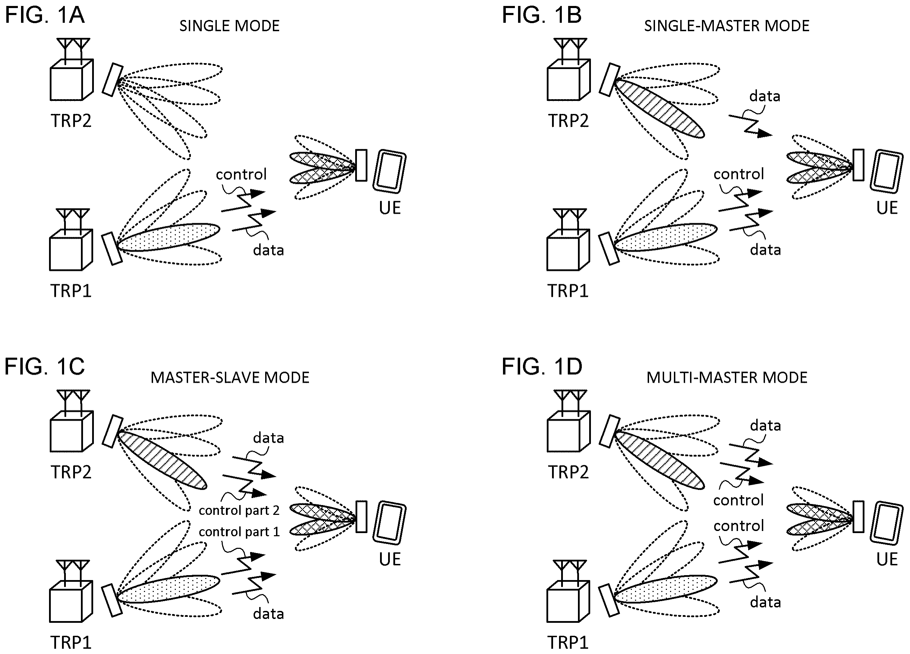

FIGS. 1A to 1D are diagrams to show examples of multi-TRP scenarios. In these examples, it is assumed that each TRP can transmit four different beams; however, this is not restrictive.

FIG. 1A shows an example of a case (which may be referred to as a single mode, a single TRP, or the like) in which only one TRP (in the present example, TRP1) out of the multi-TRP performs transmission to the UE. In this case, TRP1 transmits both of a control signal (PDCCH) and a data signal (PDSCH) to the UE.

In the present disclosure, a single-TRP mode may mean a mode when the multi-TRP (mode) is not configured.

FIG. 1B shows an example of a case (which may be referred to as a single master mode) in which only one TRP (in the present example, TRP1) out of the multi-TRP transmits a control signal to the UE, and the multi-TRP transmits a data signal thereto. The UE receives the PDSCHs transmitted from the multi-TRP, based on one piece of downlink control information (DCI).

FIG. 1C shows an example of a case (which may be referred to as a master slave mode) in which each of the multi-TRP transmits a part of a control signal to the UE, and the multi-TRP transmits a data signal thereto. In TRP1, part 1 of the control signal (DCI) may be transmitted, and in TRP2, part 2 of the control signal (DCI) may be transmitted. Part 2 of the control signal may be dependent upon part 1. The UE receives the PDSCHs transmitted from the multi-TRP, based on these parts of the DCI.

FIG. 1D shows an example of a case (which may be referred to as a multi-master mode) in which each of the multi-TRP transmits a different control signal to the UE, and the multi-TRP transmits a data signal thereto. In TRP1, a first control signal (DCI) may be transmitted, and in TRP2, a second control signal (DCI) may be transmitted. The UE receives the PDSCHs transmitted from the multi-TRP, based on these DCIs.

When a plurality of PDSCHs (which may be referred to as multi-PDSCH (multiple PDSCHs)) from the multi-TRP as shown in FIG. 1B are scheduled using one DCI, the DCI may be referred to as single DCI (S-DCI, single PDCCH). When a plurality of PDSCHs from the multi-TRP as shown in FIG. 1D are respectively scheduled using a plurality of DCIs, the plurality of DCIs may be referred to as multi-DCI (M-DCI, multi-PDCCH (multiple PDCCHs)).

From each TRP of the multi-TRP, different transport blocks (TBs)/codewords (Code Words (CWs))/different layers may be transmitted. Alternatively, from each TRP of the multi-TRP, the same TB/CW/layer may be transmitted.

As one mode of multi-TRP transmission, non-coherent joint transmission (NCJT) has been under study. In NCJT, for example, TRP1 performs modulation mapping and then layer mapping on a first codeword so as to transmit a first PDSCH by using first precoding for a first number of layers (for example, two layers). TRP2 performs modulation mapping and then layer mapping on a second codeword so as to transmit a second PDSCH by using second precoding for a second number of layers (for example, two layers).

Note that it may be defined that a plurality of PDSCHs (multi-PDSCH) to be transmitted using NCJT partially or entirely overlap in at least one of the time and frequency domains. In other words, at least one of the time and frequency resources of the first PDSCH from the first TRP and the second PDSCH from the second TRP may overlap.

It may be assumed that the first PDSCH and the second PDSCH are not in a quasi-co-location (QCL) relationship (not quasi-co-located). Reception of the multi-PDSCH may be used interchangeably with simultaneous reception of the PDSCHs that are not of a certain QCL type (for example, QCL type D).

In URLLC for the multi-TRP, support of PDSCH (transport block (TB) or codeword (CW)) repetition across the multi-TRP has been under study. Support of repetition schemes across the multi-TRP (URLLC schemes, for example, schemes 1, 2a, 2b, 3, and 4) in the frequency domain, the layer (spatial) domain, or the time domain has been under study. In scheme 1, the multi-PDSCH from the multi-TRP is subjected to space division multiplexing (SDM). In schemes 2a and 2b, the PDSCH from the multi-TRP is subjected to frequency division multiplexing (FDM). In scheme 2a, a redundancy version (RV) is the same for the multi-TRP. In scheme 2b, the RV may be the same or may be different for the multi-TRP. In schemes 3 and 4, the multi-PDSCH from the multi-TRP is subjected to time division multiplexing (TDM). In scheme 3, the multi-PDSCH from the multi-TRP is transmitted in one slot. In scheme 4, the multi-PDSCH from the multi-TRP is transmitted in different slots.

According to the multi-TRP scenario as described above, more flexible transmission control using a channel with satisfactory quality can be performed.

NCJT using multi-TRP/panel may use a high rank. In order to support ideal and non-ideal backhauls among a plurality of TRPs, both of the single DCI (single PDCCH, for example, FIG. 1B) and the multi-DCI (multi-PDCCH, for example, FIG. 1D) may be supported. For both of the single DCI and the multi-DCI, the maximum number of TRPs may be 2.

For single PDCCH design (mainly for the ideal backhaul), enhancement of the TCI has been under study. Each TCI code point in the DCI may correspond to one or two TCI states. A TCI field size may be the same as that of Rel. 15.

Regarding the PDCCH/CORESET defined in Rel. 15, one TCI state without a CORESET pool index (CORESETPoolIndex) (which may be referred to as TRP information (TRP Info)) is configured for one CORESET.

Regarding enhancement of the PDCCH/CORESET defined in Rel. 16, the CORESET pool index is configured for each CORESET in the multi-TRP based on the multi-DCI.

### (Inter-Cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

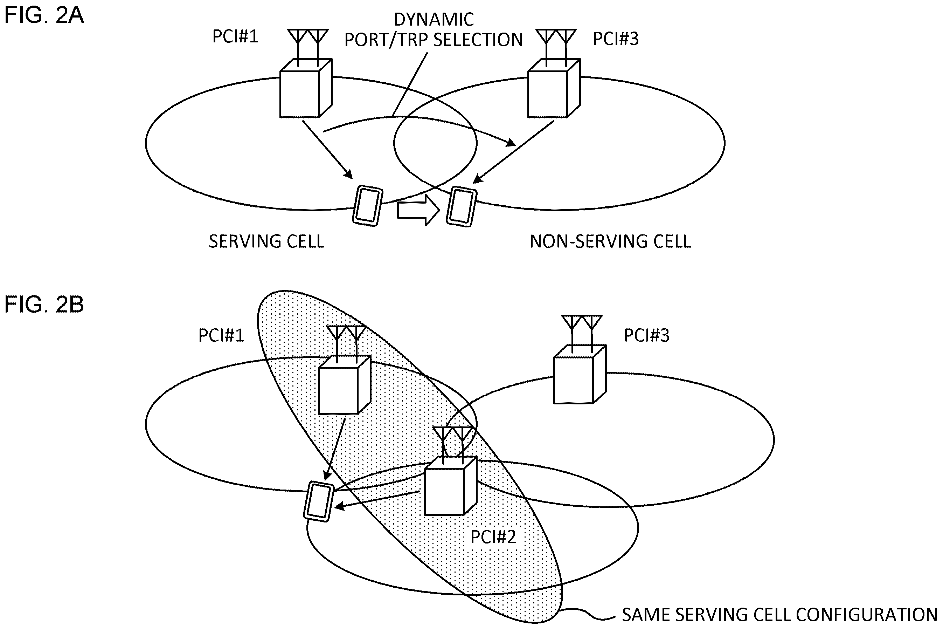

It is considered that a UE receives channels/signals from a plurality of cells/TRPs in inter-cell mobility (for example, L1/L2 inter cell mobility) (see FIGS. 2A and 2B).

FIG. 2A shows an example of inter-cell mobility with cells including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this corresponds to a case where the UE switches from cell #1 to cell #3 (for example, fast cell switch).

In this case, selection of a port (for example, an antenna port)/TRP may be performed dynamically. The selection of a port (for example, an antenna port)/TRP may be performed based on a TCI state indicated or updated by DCI/MAC CE. Here, shown is a case of supporting configuration of different physical cell IDs (for example, PCIs) for cell #1 and cell #3.

FIG. 2B shows an example of a multi-TRP scenario (for example, inter-cell mobility in a case of using multi-TRP (Multi-TRP inter-cell mobility)). A UE may be configured with a plurality of (for example, two) TRPs (or different CORESET pool indices) in each cell. Here, shown is a case where the UE receives channels/signals from TRP #1 and TRP 2. Here, also shown is a case where TRP #1 corresponds to physical cell ID (PCI) #1 and TRP #2 corresponds to PCI #2.

The multi-TRP (for example, TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 2B. Here, shown is a case where NCJT is performed between TRPs corresponding to different PCIs. Note that the same serving cell configuration may be applied/configured for TRP #1 and TRP #2.

It may be defined that a plurality of PDSCHs (multi-PDSCH) subjected to NCJT partially or completely overlap with respect to at least one of time and frequency domains. In other words, a first PDSCH from TRP #1 and a second PDSCH from TRP #2 may overlap in terms of at least one of time and frequency resources. The first PDSCH and the second PDSCH may be used for transmission of the same TB or may be used for transmission of different TBs.

It may be assumed that the first PDSCH and the second PDSCH are not in a quasi-co-location (QCL) relationship (not quasi-co-located). Reception of the multi-PDSCH may be used interchangeably with simultaneous reception of the PDSCHs that are not of a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI, single PDCCH)) (single-master mode). The one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may be scheduled by using a plurality of respective pieces of DCI (multi-DCI (M-DCI), multi-PDCCH (multiple PDCCHs)). The plurality of pieces of DCI may be transmitted from respective TRPs of the multi-TRP. A structure using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" may be used interchangeably with "independent."

In inter-cell mobility, the following scenario 1 or scenario 2 is considered. Note that, in the present disclosure, a serving cell may be used interchangeably with a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, a candidate cell, and an additional cell may be used interchangeably.

### <Scenario 1>

Scenario 1 corresponds to inter-cell mobility of the multi-TRP, for example. Note that scenario 1 may be a scenario not corresponding to inter-cell mobility of the multi-TRP. In scenario 1, for example, the following procedure is performed.
(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. In other words, switching of the serving cells by L1/L2 is not supported. The UE is configured with a higher layer parameter related to the PCI of the non-serving cell from the serving cell. Scenario 1 may be applied in Rel. 17, for example.

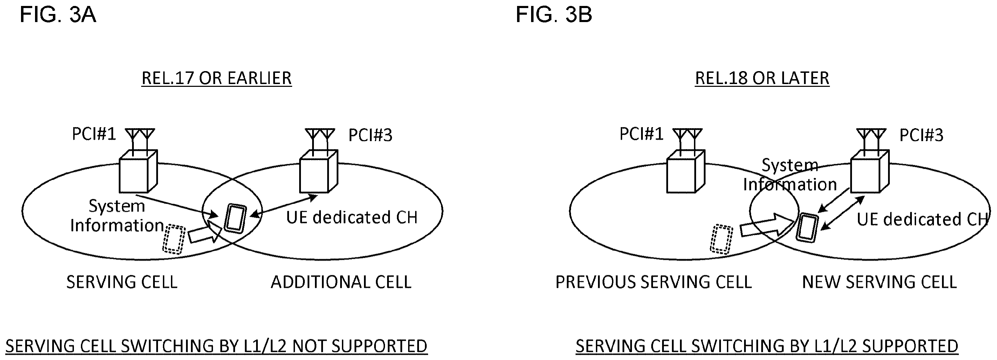

FIG. 3A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message). When the UE moves out of coverage of the serving cell, switching of cells is required through handover (also referred to as L3 mobility) or the like.

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover (or without performing an L3 mobility procedure). For handover, RRC reconnection is required, which generates a period in which data communication cannot be performed, and thus by applying L1/L2 inter-cell mobility that does not require handover, data communication can be continued even at the time of the serving cell change. In scenario 2, for example, the following procedure is performed.
(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a pre-configuration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18 or later versions.

FIG. 3B is a diagram to show an example of movement of the UE in Rel. 18. In Rel. 18, the serving cell is switched by L1/L2. The UE can receive/transmit a UE-dedicated channel/common channel from/to a new serving cell. The UE may go out of the coverage of the previous serving cell.

### (Configuration of Candidate Cells)

In L1/L2 inter-cell mobility, in addition to the serving cell, candidate cells may be configured. In the present disclosure, a candidate cell may be used interchangeably with a target cell, an additional cell, or an additional PCI. One or more candidate cells (or a candidate cell group) may be separately associated with respective serving cells, or one or more candidate cells (or a candidate cell group) may be associated with a plurality of serving cells in common.

Configuration of candidate cells (or a candidate cell group) may be configured similarly to inter-cell beam management (inter-cell BM) of existing systems (for example, Rel. 17 or earlier versions) by using a given higher layer parameter (for example, ServingCellConfig). Alternatively, for configuration of candidate cells (or a candidate cell group), a framework for carrier aggregation configuration (for example, CA configuration framework) or a framework for CHO (Conditional Handover)/CPC (Conditional PSCell Change) configuration may be reused.

Regarding candidate cells (or a candidate cell group) configured by a higher layer parameter, activation/deactivation may be indicated to the UE by a MAC CE/DCI.

As configuration of candidate cells (or association with serving cells), for example, at least one of the following configuration example 1 to configuration example 3 may be applied. Here, shown is an example of SpCell #0, SCell #1, and SCell #2 being configured as serving cells and candidate cells/a candidate cell group being configured separately from the serving cells. The following configuration example 1 to configuration example 3 are an example, and the number of serving cells/the number of candidate cells/the number of candidate cell groups, association between the serving cells and the candidate cells, and the like are not limited to this and may be changed as appropriate. Alternatively, another configuration example(s) may be supported/employed in addition to/instead of configuration example 1 to configuration example 3.

### {Configuration Example 1}

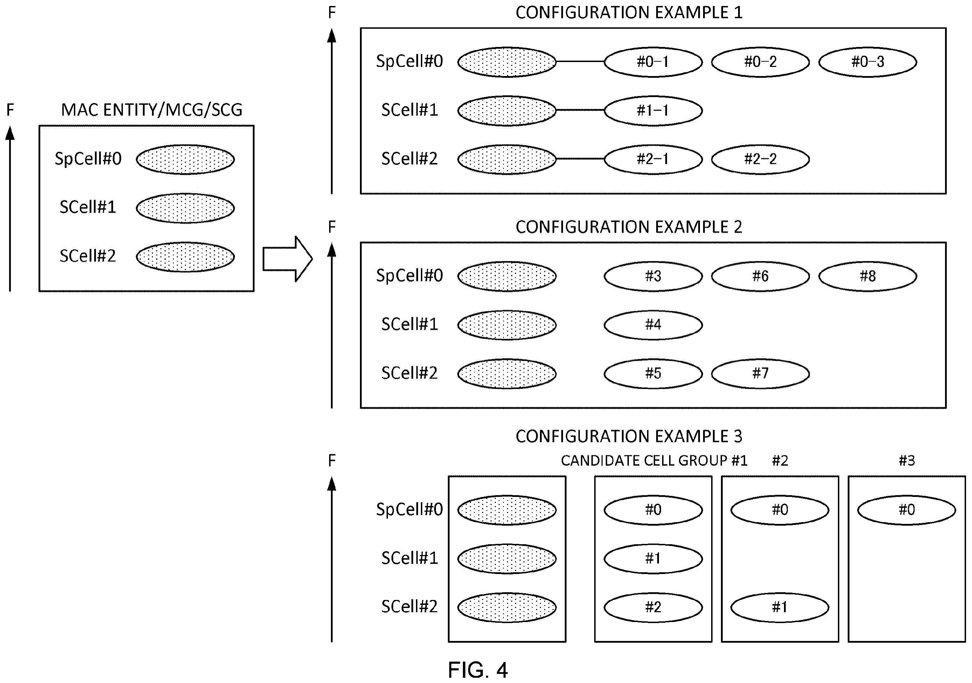

In configuration example 1, one or more candidate cells are respectively associated with/configured for each serving cell (or a frequency domain corresponding to each serving cell) (see FIG. 4). Here, shown is a case where candidate cells #0-1, #0-2, and #0-3 are associated with SpCell #0 (or a frequency domain corresponding to SpCell #0), candidate cell #1-1 is associated with SCell #1 (or a frequency domain corresponding to SCell #1), and candidate cells #2-1 and #2-2 are associated with SCell #2 (or a frequency domain corresponding to SpCell #2). Information related to the association may be configured/indicated from the base station to the UE by RRC/MAC CE/DCI.

### {Configuration Example 2}

In configuration example 2, candidate cells are associated with/configured for a MAC entity/MCG/SCG (see FIG. 4). Here, shown is a case where candidate cells #3 to #8 are associated with a MAC entity/MCG/SCG. In this case, instead of a candidate cell(s) being associated with each serving cell, the candidate cells are configured for the MAC entity or cell group (for example, an MCG/SCG). Information related to the candidate cell(s) configured for each cell may be configured/indicated from the base station to the UE by RRC/MAC CE/DCI.

### {Configuration Example 3}

In configuration example 3, one or more candidate cell groups are configured (see FIG. 4). Each candidate cell group includes one or more candidate cells. Here, shown is a case where candidate cell group #1 including candidate cells #0 to #2, candidate cell group #2 including candidate cells #0 and #1, and candidate cell group #3 including candidate cell #0 are configured. At least one of information related to the candidate cell groups to be configured and information related to the candidate cell(s) included in each candidate cell group may be configured/indicated from the base station to the UE by RRC/MAC CE/DCI.

### {Serving Cell Switching}

In existing systems (for example, Rel. 17), L1 beam indication for a TCI state of an additional PCI (or an additional cell) (for example, indication by a TCI state field of DCI) is supported.

It is assumed, in Rel. 18 or later versions, that a new L1/L2 signal (for example, DCI/MAC CE) indicating switching of a serving cell (for example, serving cell switch) is supported. It may be assumed that, as the indication, at least one of implicit indication and explicit indication is supported. The implicit indication may mean that a certain CORESET is updated to a TCI state associated with an additional PCI by a MAC CE, for example. The explicit indication may mean that cell switching is directly indicated by DCI/MAC CE.

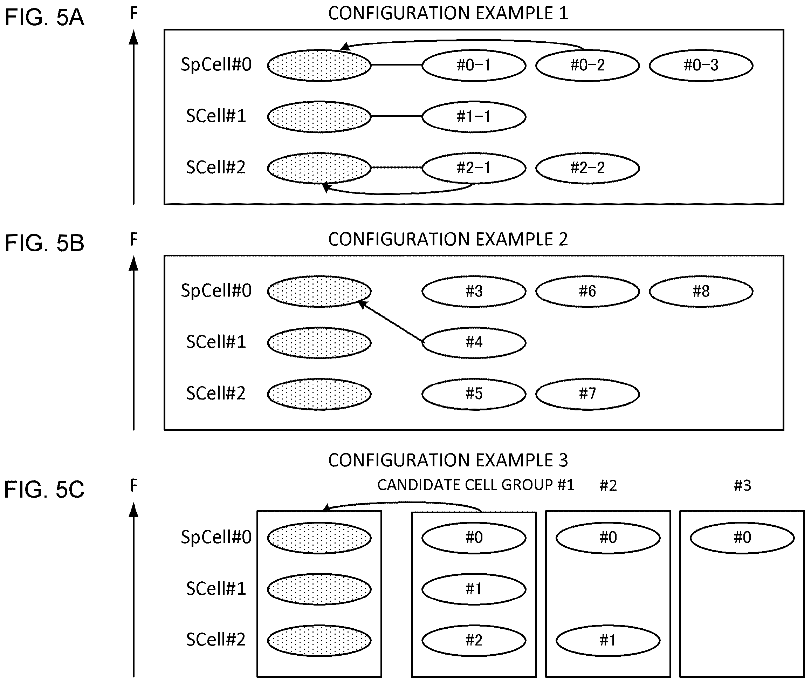

For example, in configuration example 1 of candidate cells, a given candidate cell may be specified as a serving cell (or indicated for switching with a serving cell) via L1/L2 signaling. FIG. 5A shows a case where candidate cell #0-2 turns to be an SpCell of the MCG/SCG (SpCell #0 and candidate cell #0-2 are switched) by L1/L2 signaling. Also shown is a case where candidate cell #2-1 turns to be an SCell of an MCG/SCG (SCell #2 and candidate cell #2-1 are switched) by L1/L2 signaling.

Alternatively, in configuration example 2 of candidate cells, a given candidate cell may be specified as a serving cell (or indicated for switching with a serving cell) via L1/L2 signaling. FIG. 5B shows a case where candidate cell #4 turns to be an SpCell of an MCG/SCG (SpCell #0 and candidate cell #4 are switched) by L1/L2 signaling.

Alternatively, in configuration example 3 of candidate cells, a given candidate cell group (or one or more candidate cells included in the given candidate cell group) may be changed/updated to a serving cell group via L1/L2 signaling. FIG. 5C shows a case where candidate cell group #1 (or candidate cells #0 to #2 included in candidate cell group #1) turns to be a serving cell group (or the serving cell group and candidate cell group #1 are switched) by L1/L2 signaling. Of the candidate cells (here, candidate cells #0 to #2) included in candidate cell group #1, the candidate cell associated with SpCell #0 or the candidate cell (here, candidate cell #0) configured for the same frequency domain as that of SpCell #0 may be configured as a new SpCell. Alternatively, the candidate cell to turn to be the SpCell may be indicated by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG. A timing advance group including an SpCell of a MAC entity may be referred to as a primary timing advance group (PTAG), and a TAG other than the PTAG may be referred to as a secondary timing advance group (STAG).

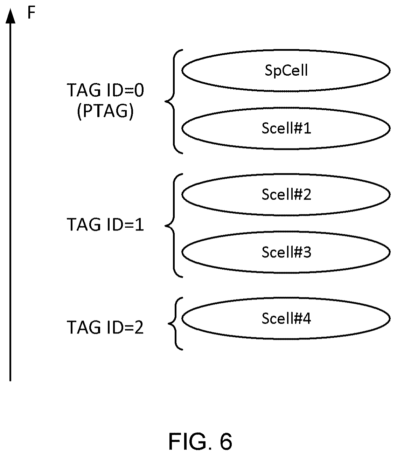

In existing systems (for example, Rel-16 NR), configuration of four TAGs at maximum (for example, MCG/SCG) is supported for each cell group (see FIG. 6). FIG. 6 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a given timer (for example, a TA timer), based on reception of the TA command.

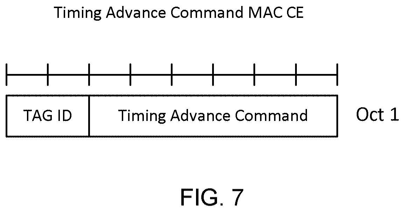

A MAC CE for timing advance command (TAC MAC CE) may have a structure including a field for timing advance group index (for example, TAG ID) and a field for timing advance command (see FIG. 7).

On the other hand, a case is assumed that, in future radio communication systems, a different TAG (or TAG-ID) is configured for each of one or more TRPs corresponding to a certain cell (or CC). For example, regarding multi-TRP operation using multi-DCI, it is assumed that two TAs (or TAGs) are supported for UL transmission.

Alternatively, a case is assumed that different TRPs corresponding to a certain cell share a common TAG. Alternatively, a case where the MAC CE for TA command is applied to only one TRP or a case where the MAC CE for TA command is applied to a plurality of TRPs is assumed.

Alternatively, a case is also assumed that TRPs corresponding to different cells use different TAGs/share a common TAG. For example, it is also assumed that UL transmission is controlled based on common/different timing advance for a serving cell (or a TRP of the serving cell) and a non-serving cell (or a TRP of the non-serving cell) in inter-cell mobility.

In this manner, it is also assumed that, in MIMO of Rel. 18 or later versions, two timing advances (TAs) for two TRPs are supported in multi-TRP operation using multi-DCI.

When the TAG is configured/controlled in a unit of a TRP, a time alignment timer (for example, timeAlignmentTimer) may be configured for each TRP. The time alignment timer may control time in which the MAC entity considers that the serving cell belonging to an associated TAG is uplink time aligned (for example, uplink time aligned). For example, in order to maintain (for example, maintenance) a UL time alignment, the time alignment timer may be configured by RRC.

The time alignment timer (for example, timeAlignementTimer) may be maintained for the UL time alignment. In Rel. 17, the time alignment timer (for example, timeAlignementTimer) corresponds to each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a given value (N_{TA}) is maintained for the indicated TAG, the MAC entity uses the timing advance command for the indicated TAG or starts or restarts the time alignment timer related to the indicated TAG. The given value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, given operation for PTAG is employed when a timing advance timer corresponding to a PTAG expires, and given operation for STAG may be employed when a timing advance timer for STAG expires.

For example, when such a time alignment timer expires, the following operation (for example, the given operation for PTAG/given operation for STAG) may be performed.

### {Given Operation for PTAG}

In a case where the time alignment timer is associated with a PTAG,
- flush (discard) all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Given Operation for STAG}

In a case where the time alignment timer is associated with an STAG, for all serving cells belonging to the TAG,
- flush (discard) all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

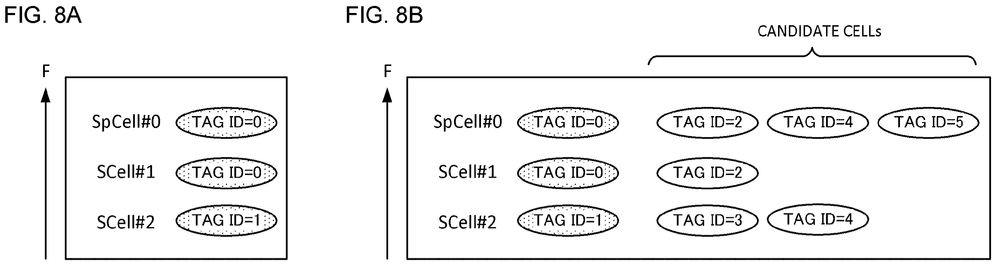

When candidate cells are configured/defined, communication may be supported to be controlled in consideration of timing advances (TAs) corresponding to the respective candidate cells. As described above, each candidate cell may be associated with a TAG (see FIGS. 8A and 8B), for example. FIGS. 8A and 8B show an example of a TAG (or TAG ID configuration) for each cell group in an existing system (for example, Rel. 17 (or earlier versions)) and an example of TAG ID configuration for each candidate cell, respectively.

When candidate cells are configured/applied/supported, it is assumed that different serving cells/different candidate cells are associated with the same TAG, as described in FIG. 8B. The TAG for the candidate cells may be indicated by the base station, or may be judged based on a TA for the candidate cells acquired by the UE.

It is also conceivable that the UE performs, for UL transmission for candidate cells (for example, candidate cells with indication of switching to a serving cell), UL transmission in consideration of a TA corresponding to the candidate cells. When considering the TA for the candidate cells, the UE is required to perform TA acquisition for the candidate cells (for example, TA acquisition of candidate cells).

As the TA acquisition for the candidate cells, a plurality of TA acquisition methods, such as TA acquisition using a RACH (for example, RACH-based solutions) and TA acquisition without using a RACH (RACH-less solutions), are conceivable. The TA acquisition methods may be used interchangeably with TA acquisition schemes, TA acquisition types, or TA acquisition procedures. In the present disclosure, TA acquisition, TA measurement, TA calculation, TA computation, and TA determination may be used interchangeably.

For example, the UE may acquire a TA for a candidate cell by transmitting, to the candidate cell, a RACH (for example, a PDCCH order RACH) indicated/triggered by a PDCCH. Information (for example, a TA value) related to the TA for the candidate cell may be included in a response signal of the RACH (for example, RAR). The RAR may be transmitted from a serving cell or a candidate cell. Alternatively, a TA for a candidate cell may be acquired by using a RACH triggered by the UE or a RACH triggered from a network via a higher layer. The PDCCH order may be triggered by only a source cell (or serving cell).

Alternatively, the UE may acquire a TA for a candidate cell by transmitting, to the candidate cell, a signal other than a RACH. Information (for example, a TA value) related to the TA for the candidate cell may be indicated from the base station to the UE. As the signal other than the RACH, an SRS may be applied, for example.

Alternatively, the UE may measure/calculate/acquire a TA for a candidate cell, based on a DL signal (for example, a downlink reference signal) transmitted from each cell (for example, candidate cell/serving cell). The method in which the UE acquires a TA for a candidate cell, based on a DL signal transmitted from one or more cells, may be referred to as UE based TA measurement.

In the UE based TA measurement, the downlink reference signal may be a given DL signal (for example, a synchronization signal block (for example, SSB)/CSI-RS or the like). For example, the UE may measure a difference between timings of DL signal receptions from a plurality of cells (or two cells) to obtain a TA for a candidate cell.

The plurality of cells may include a cell (for example, a serving cell) to be a reference. In this case, the UE may calculate a TA necessary for the candidate cell, based on a reception timing in a reference cell (and a TA value for the reference cell) and a timing difference between the reference cell and the candidate cell (for example, T). The UE may acquire a TA for the candidate cell by using a timing advance command (TAC) transmitted from a serving cell.

### (TA Control in Unit of TRP/Panel)

As described above, when communication is performed using a plurality of transmission/reception points (for example, TRPs)/panels, it is also assumed to control timing advance (TA) for each TRP/for each panel.

In NR of Rel. 18 or later versions, it is considered that, regarding a RACH triggered by a PDCCH order and a RACH triggered by the UE, contention based random access (CBRA)/contention free random access (CFRA) is considered/determined in a unit of a TRP or in a unit of a TRP TA (TA of each TRP).

When application/configuration of timing advance is supported for each TRP (or for each TRP), the UE controls UL transmission (for example, RACH transmission or the like) in each TRP, based on timing advance corresponding to each TRP (or timing advance group to which each TRP belongs).

Information (for example, a TRP index/TRP ID) related to the TRP corresponding to each serving cell may be configured/indicated from the base station to the UE using RRC/MAC CE/downlink control information. The UE may receive related information related to timing advance corresponding to each TRP (for example, information related to a TA value/timing advance command/time alignment timer or the like) from the base station.

Each embodiment of the present disclosure may be applied/supported in at least one of an intra-cell multi-TRP (Intra-cell M-TRP) and an inter-cell multi-TRP (Inter-cell M-TRP).

In the intra-cell multi-TRP, a plurality of TRPs (or activated TCI states of a plurality of TRPs) may be associated with the same cell ID. The cell ID may be a physical cell ID (PCI).

In the inter-cell multi-TRP, a plurality of TRPs (or activated TCI states of a plurality of TRPs) may be associated with different cell IDs (for example, PCIs). For example, in the inter-cell multi-TRP, two TRPs may be used interchangeably with two TRPs respectively associated with two PCIs.

When application/configuration of timing advance is supported for each TRP (or in a unit of a TRP), each TRP may belong to a different TAG. A plurality of TRPs (for example, two TRPs) in the serving cell may respectively belong to two TAGs. The TAG may include a plurality of TRPs from a plurality of serving cells. All of the TRPs/serving cells in the TAG apply/maintain the same timing advance (TA)/same time alignment timer.

In the present disclosure, one or more sub-TAGs may be included in the TAG. For example, two TRPs in the serving cell may respectively belong to two sub-TAGs, and may belong to one TAG. The sub-TAG may include a plurality of TRPs from a plurality of serving cells. All of the TRPs/serving cells in the sub-TAG apply/maintain the same timing advance (TA)/same time alignment timer.

For example, the TA may be applied to each TRP (or indication in a unit of TRP TA may be performed). For example, at least one of the following options may be applied.

### {Option 1}

A different TAG-ID may be configured for each TRP, and a different MAC CE for TA command may be configured for each TRP. Each TAG may maintain the time alignment timer for UL time alignment.

### {Option 2}

Different TRPs may share the TAG. The MAC CE for TA command may be applied to only one TRP. The UE applies different TA to another TRP. For example, the UE may adjust the TA value for another TRP (for example, TRP #1) by a TA offset (TA_TRP_offset), based on TA for TRP #0 (TA_TRP #0).

In this case, only one time alignment timer may be present for the UL time alignment of a plurality of TRPs. This may mean that the UL time alignment of a plurality of TRPs is simultaneously maintained or lost.

### {Option 3}

A single TAG may be provided. A MAC CE for TA command may be applied to a plurality of serving TRPs for the UE.

### {Option 4}

A single TAG may be provided. A MAC CE for TA command received in the TRP/CW/PDSCH/DMRS port group may be applied to the same TRP/CW/PDSCH/DMRS port group of the TAG. Each TRP/CW/PDSCH/DMRS port group of the TAG maintains the time alignment timer for UL time alignment.

In this manner, it is also assumed that, in Rel. 18 or later versions, a plurality of timing advances are supported in the multi-TRP (for example, the multi-TRP using multi-DCI). For example, a plurality of (for example, two) timing advances may be supported for the multi-TRP (for example, two TRPs) using multi-DCI. Application of a plurality of timing advances for the multi-TRP may be supported in an intra-cell/inter-cell multi-DCI multi-TRP scenario, or may be supported in a plurality of frequency ranges (for example, FR1 and FR2).

### (Per-TRP RACH Procedure in Multi-TRP)

For RACH procedure for each TRP (or TRP TA) in multi-TRP, studies have not sufficiently been made on how to perform the RACH procedure.

For example, it has been agreed that, for the purpose of reduction of latency/interruption of handover, a UE performs, on a candidate cell, the following procedures before receiving an L1/L2 cell switch command:
- DL synchronization for candidate cell
- TRS tracking for candidate cell
- CSI acquisition for candidate cell
- TCI state activation/selection for candidate cell

Studies have been carried out on whether the above-described procedures can also be performed in a case where a candidate cell is an inactive SCell.

Meanwhile, considering a scenario between distribution nodes (Distribution Units (DUs), it is assumed that some of the procedures fail on the candidate cell before the UE receives a cell switch command. For example, it is assumed that the UE performs some of the procedures only after receiving a cell switch command. In this case, for these functions/procedures on the candidate cell, a problem of how to notify and control UE operation is conceivable.

Thus, a new parameter related to specific function/procedure may be introduced before the UE receives a cell switch command.

The new parameter may be a parameter indicating whether specific function/procedure can be performed. In a case where the UE is provided with a configuration for a plurality of candidate cells via RRC signaling, the new parameter may be configured for each candidate cell.

### {Aspect 1}

For example, the new parameter may indicate, by using 1-bit information (0 or 1), whether specific function/procedure can be performed (Option 1). When a field "1" of the new parameter is indicated, the UE may perform a set of predefined/preconfigured functions/procedures before receiving a cell switch command (may assume that the set can be performed). When a field "0" of the new parameter is indicated, the UE may not perform a set of predefined/preconfigured functions/procedures before receiving a cell switch command (may assume that the set cannot be performed).

Another new parameter may be defined to indicate a set of different functions/procedures (Option 2). Defining such another new parameter (indicating different functions/procedures) requires information with different bits.

Such another new parameter (which may be simply referred to as a parameter) may indicate that each candidate cell and a current serving cell are present in (belong to) a distribution node (for example, a Distributed Unit (DU))/central node (Central Unit (CU)) or different DUs/CUs. This parameter allows a UE to be indicated with whether specific procedure can be performed, before reception of a cell switch command.

For example, when a field "0" of the parameter is configured for a candidate cell, the UE may not assume that signaling from a NW triggers, for the candidate cell, unexpected functions/procedures, or may, even when receiving signaling from the NW, ignore triggering of these functions/procedures.

For example, the field "0" of the parameter may indicate (may mean) that "CSI acquisition for the candidate cell is not allowed before reception of a cell switch command." In this case, the UE may, if CSI measurement configuration by RRC includes a candidate cell indicated by the field "0" of the parameter, ignore CSI measurement/CSI reporting for the candidate cell.

The predefined/preconfigured functions/procedures in each set may include at least one of the following:
- DL synchronization for candidate cell
- TRS tracking for candidate cell
- L1 beam acquisition or CSI acquisition for candidate cell (result of measurement of periodic, semi-persistent, or aperiodic CSI-RS in candidate cell)
- TCI state activation/selection for candidate cell
- PRACH transmission in candidate cell
- SRS transmission in candidate cell
- Monitoring of PDCCH (corresponding to certain specific format or CORESET/SS) in candidate cell

As a variation, RRC/MAC CE may select at least one of the predefined/preconfigured functions/procedures. DCI/MAC CE may indicate/activate whether a set of the selected functions/procedures is to be applied to each candidate cell. For example, DCI including a PDCCH order may be used for the indication. Which candidate cell is to be explicitly indicated may be indicated by RRC/MAC CE/DCI or may be implicitly associated with a candidate cell for a triggered PRACH.

### {Aspect 2}

When the UE receives a cell switch command by using DCI/MAC CE, a set of predefined/preconfigured functions/procedures/RSs may be triggered or activated for an indicated target cell. The target cell may be a candidate cell.

For example, for functions/procedures/RSs indicated by the field "0" of the new parameter described above (note, however, that configurations of these functions/procedures/RSs are provided by RRC), the UE may, if the cell switch command is a command for the target cell, assume that the functions/procedures/RSs have been triggered/activated for the target cell. In this case, configurations of the functions/procedures/RSs indicated by the field "0" of the new parameter may be provided by RRC.

When a cell switch command is transmitted from the NW to the UE, the cell switch command may include an explicit indication of triggering/activation of a set of some functions/procedures/RSs.

For example, to reduce wait time (latency) for data transmission in the target cell after the UE receives the cell switch command, functions/procedures necessary for the data transmission are required to be performed as soon as possible when not being performed before the cell switch command.

Content of an existing MAC CE may include, as a new cell switch command, at least one of the following to trigger some functions/procedures:
- activation/deactivation for SCell/candidate cell
- aperiodic CSI trigger state for target cell
- activation of aperiodic CSI-RS/Channel State Information-Interference Measurement (CSI-IM) resource set for target cell
- activation of TCI state for PDCCH/PDSCH for target cell
- timing advance command (TA command) for target cell

Some existing DCI indications may include, as a new cell switch command, at least one of the following to trigger some functions/procedures.
- PDCCH order for triggering RACH for target cell
- indication for triggering aperiodic CSI report for target cell

Another new indication may include at least one of the following:
- higher layer in which RACH is triggered in case where CFRA/CBRA PRACH configuration is enabled
- activation of configuration related to L1/CSI measurement/reporting

In this manner, using such a new parameter allows TRS tracking and TCI state activation/deactivation for a candidate cell to be performed before a UE receives a cell switch command, for example.

### (Outline of L1L2-triggered mobility (LTM))

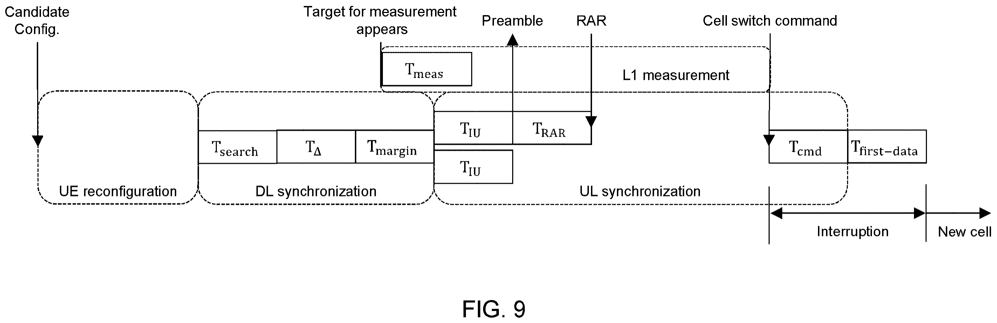

FIG. 9 is a diagram to show an outline of L1L2-triggered mobility (LTM). LTM and L1/L2 inter-cell mobility may be used interchangeably. The UE receives, from the NW, candidate cell configurations in UE reconfiguration. The UE reconfiguration includes T_{RRC}, T_{processing1}/T_{processing2}. T_{RRC} (for example, up to 10 ms) is processing time for RRC reconfiguration that delivers candidate cell configurations (candidate configurations). T_{processing1}/T_{processing2} (for example, up to 20 ms for the same FR, up to 40 ms for different FRs) are time for respective UE processings before and after a cell switch command. This may include, for some cases, L2/3 reconfiguration, RF re-tuning, baseband re-tuning, security update, if necessary, and the like.

DL synchronization includes T_{search}, T_{Δ}, and T_{margin}. T_{search} (for example, 0 ms in a case where a cell is known, up to 60 ms in a case where a cell is unknown) is time necessary for a target cell search. T_{Δ} is time for fine tracking and all timing information acquisition. T_{margin} (for example, up to 2 ms) is time for post-processing of an SSB and a CSI-RS.

L1 measurement includes Tₘₑₐₛ (SMTC periodicity, (for example, 20 ms)). Tₘₑₐₛ is measurement latency from the appearance of a target to a cell switch command.

UL synchronization includes T_{IU}, T_{RAR}, and T_{cmd}. T_{IU} (for example, up to 15 ms) is time for uncertain interruption in acquisition of the first available PRACH occasion in a new cell. T_{RAR} (for example, up to 4 ms) is time for RAR latency. T_{cmd} (for example, up to 5 ms) is time for processing of L1/L2 command (HARQ and paging).

T_{first-data} after T_{cmd} is time for the UE to perform, after an RAR, the first DL reception/UL transmission on an indicated beam of a target cell.

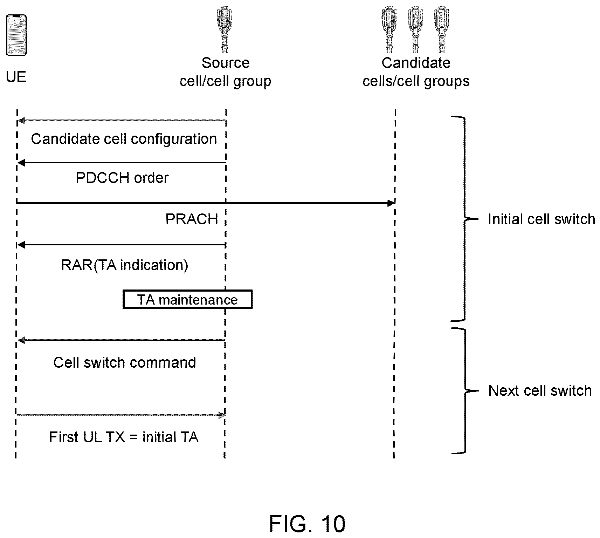

FIG. 10 is a diagram to show a PDCCH indication-based RACH (PDCCH ordered RACH) with random access response (RAR) monitoring for serving cell. Note that, in the present disclosure, a source cell and a source cell group may be used interchangeably. A candidate cell and a candidate cell group may be used interchangeably.

A source cell transmits a candidate cell configuration to the UE. The source cell transmits, to the UE, a RACH indication based on a PDCCH (including, for example, DCI format 1_0) (PDCCH order). Note that, in the indication, a parallel RAR is complicated, and thus one candidate cell is indicated. The UE transmits a PRACH in RACH procedure to the candidate cell, for TAG/TA acquisition.

Next, the source cell transmits an RAR (TA indication) to the UE. In this case, only one common search space (CSS) is configured, and thus the RAR is monitored in an SpCell (only in a Distributed Unit (DU)). The UE may perform transmission/reception in a current serving cell. In the source cell, TA adjustment is performed.

Next, the source cell transmits a cell switch command to the UE. At this time, TA information can be moved from the source cell to a target cell. In this case, there is a possibility that UL synchronization for all candidate cells has not been completed after the first cell switch. The UE performs the first UL transmission by using an initial TA.

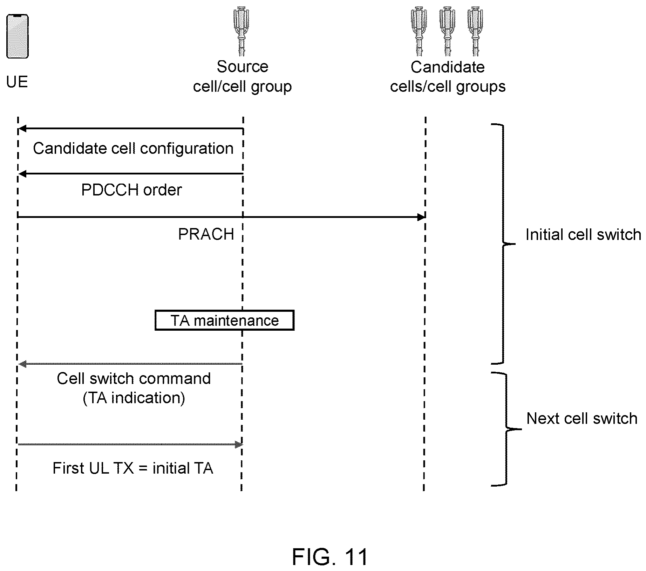

FIG. 11 is a diagram to show a PDCCH indication-based RACH (PDCCH ordered RACH) without random access response (RAR) monitoring for serving cell. Only the difference between FIG. 11 and FIG. 10 will be described. In an example of FIG. 11, PDCCH based RACH indication (PDCCH order) may indicate a plurality of candidate cells. The UE may transmit a PRACH in RACH procedure to the candidate cells, for acquisition of a plurality of TAGs/TAs. The source cell does not transmit an RAR, and transmits a TA indication in a cell switch command.

In the present disclosure, a RACH without an RAR may be used interchangeably with a RACH without RAR monitoring. A RACH may be used interchangeably with PRACH transmission triggered by a PDCCH order. RACH procedure/PRACH transmission without RAR monitoring may be used interchangeably with RACH procedure/PRACH transmission not requiring RAR monitoring, or RACH procedure/PRACH transmission in which RAR monitoring is not requested.

For LTM, each candidate cell configuration may include at least a higher layer parameter "CellGroupConfig" and a configuration ID.

LTM supports a case that a candidate cell configuration is a delta configuration at the top of a reference configuration. Here, in relation to the delta configuration, the UE stores the reference configuration as another configuration. In other words, the reference configuration may be managed separately. For example, for a delta configuration for a candidate cell, another reference configuration may be provided.

A MAC CE including LTM-related information for cell switching may be used as a trigger for LTM cell switching. The LTM cell switching may be monitored by a timer.
A MAC CE for cell switch command may be used to indicate a connection to a target cell.

In LTM, the target cell (PCell/SCell) may be a current SCell/PCell. In other words, the current SCell/PCell (serving cell) may be configured as a candidate cell.

### (Unified/Common TCI Framework)

A unified TCI framework allows a plurality of types of (UL/DL) channels/RSs to be controlled by a common framework. The unified TCI framework may, instead of defining a TCI state or a spatial relation for each channel in a manner similar to that of Rel. 15, indicate a common beam (common TCI state) and apply it to all the UL and DL channels, or apply a common beam for UL and a common beam for DL to all the UL channels and all the DL channels, respectively.

One common beam for both DL and UL or a common beam for DL and a common beam for UL (two common beams in total) are under study.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

MAC CE based beam management (MAC CE level beam indication) may align default UL and DL beams with each other. A default TCI state of a PDSCH may be updated to match to a default UL beam (spatial relation).

DCI based beam management (DCI level beam indication) may indicate a common beam/unified TCI state from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for a plurality of TRPs).

For example, description "N = 2, M = 2" may mean that a plurality of (two) UL TCI states and a plurality of (two) DL TCI states for a plurality of (two) TRPs are notified/configured/indicated for the UE (separate TCI states for a plurality of TRPs).

Note that, in the above-described examples, the cases where N and M values are each 1 or 2 have been described, but the N and M values may each be 3 or more, and N and M may be different from each other.

For Rel. 17, support of N = M = 1 is under study. For Rel. 18 (or later versions), support of another case is under study.

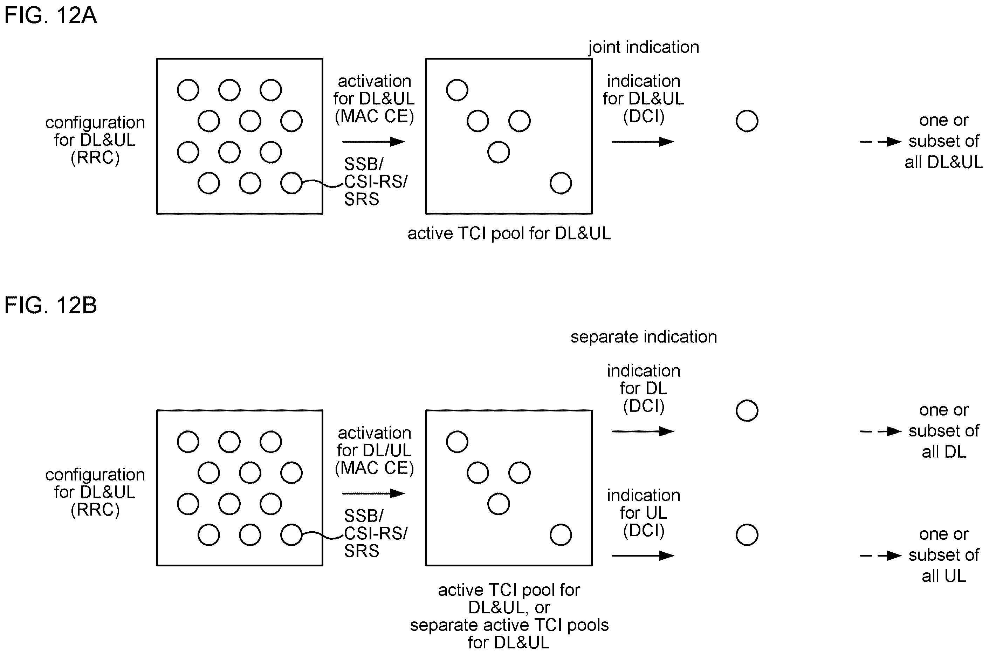

In an example in FIG. 12A, an RRC parameter (information element) configures a plurality of TCI states for both DL and UL. A MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 12A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 12B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be PUSCH/SRS/PUCCH(s). Thus, different pieces of DCI may indicate a UL TCI and a DL DCI separately.

In Rel-17 (or later versions) NR, it is assumed that beam activation/indication for TCI states associated with different physical cell identifiers (PCIs) is supported by a MAC CE/DCI. In Rel-18 (or later versions) NR, it is assumed that indication of serving cell change for cells with different PCIs is supported by a MAC CE/DCI.

### {Physical Layer Procedure/Antenna Port QCL for Data}

To be provided with a reference signal for a PDSCH DMRS and PDCCH DMRS and a CSI-RS in a certain CC, and furthermore, to, if a UL TX (transmission) spatial filter for dynamic grant and configured grant-based PUSCH and PUCCH resources and an SRS in the certain CC is available, be provided with a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies this indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state configured with DLorJointTCIState is not configured, the UE assumes that the QCL type A/D source RS is configured in a CC/DL BWP to which the TCI state is applied.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1 2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's;
   - modulation and coding scheme (MCS) fields are all '1's;
   - a new data indicator (NDI) field is 0; and
   - frequency domain resource assignment (FDRA) fields are all '0's for FDRA type 0, are all '1's for FDRA type 1, or are all '0's for dynamic switching (DynamicSwitch) (in a manner similar to that of validation of a PDCCH with a DL semi-persistent scheduling (SPS) release or a UL grant type 2 scheduling release).

Note that the DCI in Mode 2/Mode 3 described above may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (information on presence of TCI in DCI, "tci-PresentInDCI") is configured for each CORESET.

The TCI field in DCI format 1_1 is 0 bits in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating this DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bits in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating this DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating this DCI format 1_2, for all the CORESETs in the indicated BWP.

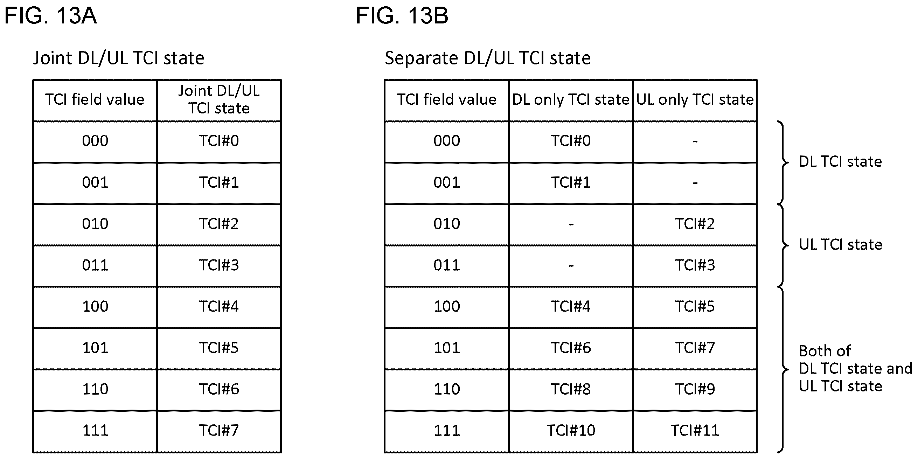

FIG. 13A shows an example of DCI based joint DL/UL TCI state indication. A TCI state ID indicating a joint DL/UL TCI state is associated with a TCI field value for the joint DL/UL TCI state indication.

FIG. 13B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001," "010" to "011," and "100" to "111" are associated with only one TCI state ID for DL, only one TCI state ID for UL, and both one TCI state ID for DL and one TCI state ID for UL, respectively.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be used interchangeably.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be used interchangeably.

The configured Rel-17 TCI state may not be shared with at least one of UE-specific reception in a PDSCH/PDCCH (updated by using DCI/MAC CE/RRC of Rel. 17), a dynamic grant (DCI)/configured grant PUSCH, and a plurality of (for example, all) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state or a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE judges the configuration/indication, based on a specific parameter.

It is studied that for the UE, update of an indicated TCI state and update of a configured TCI state are performed separately. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For a non-UE-dedicated channel/RS (excluding the CORESET), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

### (UL TCI State)

For Rel-16 NR, it is studied that a UL TCI state is used as a UL beam indication method. Notification of the UL TCI state is similar to notification of a UE DL beam (DL TCI state). Note that the DL TCI state may be used interchangeably with a TCI state for a PDCCH/PDSCH, and vice versa.

A channel/signal for which the UL TCI state is configured (indicated) (which may be referred to as a target channel/RS) may be, for example, at least one of a PUSCH (PUSCH DMRS), a PUCCH (PUCCH DMRS), a random access channel (Physical Random Access Channel (PRACH)), an SRS, and the like.

An RS (source RS) being in a QCL relationship with the channel/signal may be, for example, a DL RS (for example, an SSB, a CSI-RS, a TRS, or the like) or a UL RS (for example, an SRS, an SRS for beam management, or the like).

In the UL TCI state, the RS being in a QCL relationship with the channel/signal may be associated with a panel ID for reception or transmission of the RS. The association may be configured (or indicated) explicitly by higher layer signaling (for example, RRC signaling, a MAC CE, or the like), or may be judged implicitly.

The correspondence between the RS and the panel ID may be configured to be included in UL TCI state information, or may be configured to be included in at least one of resource configuration information, spatial relation information, and the like for the RS.

A QCL type indicated by the UL TCI state may be existing QCL types A to D or another QCL type, and may include a given spatial relation, a relevant antenna port (port index), and the like.

The UE may, when being indicated with a relevant panel ID (for example, indicated by DCI) for UL transmission, perform the UL transmission by using a panel corresponding to the panel ID. The panel ID may be associated with the UL TCI state, and the UE may, when being indicated (or activated) with the UL TCI state for a given UL channel/signal, identify a panel to be used for transmission of the UL channel/signal, in accordance with a panel ID associated with the UL TCI state.

### (Channel/RS to Which Indicated TCI State Is Applied)

An indicated TCI state based on a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management usage and an A/SP/P-SRS for codebook (CB)/non-codebook (NCB)/antenna switching usage, the indicated TCI state is applied to the SRS resource set. A configured TCI state in the SRS resource set is applied to another SRS.

### (Unified TCI State Activation/Deactivation MAC CE)

In Rel. 17, a MAC CE for activating/deactivating a unified TCI state is defined.

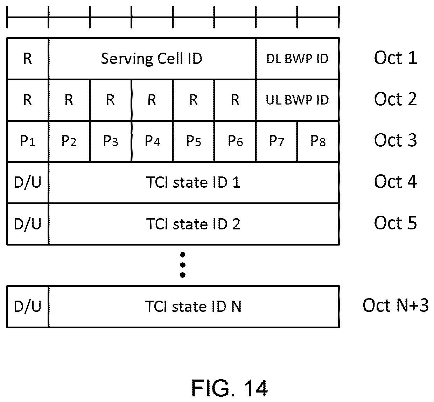

FIG. 14 is a diagram to show an example of the unified TCI state activation/deactivation MAC CE. The MAC CE shown in FIG. 14 includes a field indicating a serving cell ID, a field indicating a DL BWP ID, a field indicating a UL BWP ID, a TCI state ID field ("TCI state ID j" (where j is an integer between 1 and N), a field indicating the number of TCI states corresponding to a corresponding TCI state field ("Pi" (where i is an integer greater than or equal to 1), a field indicating that a TCI state of a corresponding TCI state field is DL/joint or UL ("D/U"), and a reserved bit field ("R").

The UE is activated with a unified TCI state (joint TCI state or separate (DL/UL) TCI state) by using activation by the MAC CE.

### (Analysis)

Incidentally, a beam/TCI state for a target candidate cell can be indicated by using a MAC CE for a cell switch command. Thus, it is required that a TCI state (or beam index) for each candidate cell is configured by higher layer signaling before the cell switch command is received, and furthermore, the MAC CE is active.

In this case, it is unclear how a TCI state pool (TCI state configuration) for each candidate cell is configured and activated for many candidate cells (which can be configured as a current serving cell and a candidate cell, and include inactive SCells). Unless these are clear, appropriate control of cell switching may fail, which may cause communication quality degradation.

In view of this, the inventors of the present invention focused on configuration/activation of a TCI state pool for each candidate cell, and came up with the idea of one aspect of the present embodiment.

Embodiments according to the present disclosure will be described in detail with reference to the drawings as follows. The radio communication methods according to respective embodiments may each be employed individually, or may be employed in combination.

### (Various Interchangeable Expressions and so on)

In the present disclosure, "A/B" and "at least one of A and B" may be used interchangeably. In the present disclosure, "A/B/C" may mean "at least one of A, B, and C."

In the present disclosure, activate, deactivate, indicate, select, configure, update, determine, and the like may be used interchangeably. In the present disclosure, "support," "control," "controllable," "operate," "operable," and the like may be used interchangeably.

In the present disclosure, radio resource control (RRC), an RRC parameter, an RRC message, a higher layer parameter, an information element (IE), a configuration, and the like may be used interchangeably. In the present disclosure, a Medium Access Control control element (MAC Control Element (CE)), an update command, an activation/deactivation command, and the like may be used interchangeably.

In the present disclosure, the higher layer signaling may be, for example, any one or combinations of Radio Resource Control (RRC) signaling, Medium Access Control (MAC) signaling, broadcast information, another message (message from a core network, such as a positioning protocol (for example, NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the following embodiments, a "plurality of" and "two" may be used interchangeably. A "TAG" and a "TAG ID" may be used interchangeably. A "cell," a "CC," and a "carrier" may be used interchangeably. In the following embodiments, "calculation," "computation," and "acquisition" may be used interchangeably.

In the present disclosure, an index, an identifier (ID), an indicator, a resource ID, and the like may be used interchangeably. In the present disclosure, a sequence, a list, a set, a group, a cluster, a subset, and the like may be used interchangeably.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be used interchangeably.

A spatial relation information Identifier (ID) (TCI state ID) and spatial relation information (TCI state) may be used interchangeably. "Spatial relation information" may be used interchangeably as "a set of spatial relation information", "one or a plurality of pieces of spatial relation information", and the like. The TCI state and the TCI may be used interchangeably.

A panel Identifier (ID) and a panel may be used interchangeably. In other words, a TRP ID and a TRP, a CORESET group ID and a CORESET group, and the like may be used interchangeably.

In the present disclosure, a TRP, a transmission point, a panel, a DMRS port group, a CORESET pool, and one of two TCI states associated with one codepoint of a TCI field may be used interchangeably.

In the present disclosure, channel/signal transmission/reception using a single TRP may be used interchangeably with the channel/signal transmission/reception (for example, NCJT/CJT/repetition) with the same TCI state (joint/separate/indicated TCI state) or the channel/signal transmission/reception (for example, NCJT/CJT/repetition) with one TCI state (joint/separate/indicated TCI state).

Channel/signal transmission/reception using a single TRP may be used interchangeably with the channel/signal transmission/reception (for example, NCJT/CJT/repetition) with different TCI states (joint/separate/indicated TCI states) or the channel/signal transmission/reception (for example, NCJT/CJT/repetition) with a plurality of (for example, two) different TCI states (joint/separate/indicated TCI states).

In the present disclosure, a single TRP, a single-TRP system, single-TRP transmission, and a single PDSCH may be used interchangeably. In the present disclosure, multi-TRP (a plurality of TRPs), a multi-TRP system, multi-TRP transmission, and multi-PDSCH may be used interchangeably.

In the present disclosure, single DCI, a single PDCCH, multi-TRP based on single DCI, two TCI states in at least one TCI codepoint being activated, at least one codepoint of a TCI field being mapped to two TCI states, and a specific index (for example, a TRP index, a CORESET pool index, or an index corresponding to a TRP) being configured for a specific channel/CORESET may be used interchangeably.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be used interchangeably.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be used interchangeably.

In the present disclosure, multi-TRP based on multi-DCI, one CORESET pool index (CORESETPoolIndex) value being configured for a CORESET, and a plurality of specific indices (for example, TRP indices, CORESET pool indices, or indices corresponding to TRPs) being configured for a specific channel/CORESET may be used interchangeably.

In the present disclosure, TRP #1 (first TRP) may correspond to CORESET pool index=0, or may correspond to a first TCI state of two TCI states corresponding to one codepoint of a TCI field. TRP #2 (second TRP) TRP #1 (first TRP) may correspond to CORESET pool index=1, or may correspond to a second TCI state of the two TCI states corresponding to one codepoint of the TCI field.

In the present disclosure, single DCI (sDCI), a single PDCCH, a multi-TRP system based on single DCI, sDCI-based MTRP, and two TCI states in at least one TCI codepoint being activated may be used interchangeably.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be used interchangeably.

In the present disclosure, beam indication DCI, a beam indication MAC CE, and beam indication DCI/MAC CE may be used interchangeably. In other words, indication related to an indicated TCI state for a UE may be performed by using at least one of DCI and a MAC CE.

In the present disclosure, a channel, a signal, and a channel/signal may be used interchangeably. In the present disclosure, a DL channel, a DL signal, a DL signal/channel, DL signal/channel transmission/reception, DL reception, and DL transmission may be used interchangeably. In the present disclosure, a UL channel, a UL signal, a UL signal/channel, UL signal/channel transmission/reception, UL reception, and UL transmission may be used interchangeably.

In the present disclosure, applying a TCI state/QCL assumption to each channel/signal/resource may mean applying a TCI state/QCL assumption to transmission and reception of each channel/signal/resource.

In the present disclosure, a first TCI state (TCI state indicated first) may correspond to a first TRP. In the present disclosure, a second TCI state (TCI state indicated second) may correspond to a second TRP. In the present disclosure, an n th TCI state (TCI state indicated n th) may correspond to an n th TRP.

In the present disclosure, a value of a first CORESET pool index (for example, 0), a value of a first TRP index (for example, 1), and a first TCI state (first DL/UL (joint/separate) TCI state) may correspond to each other. In the present disclosure, a value of a second CORESET pool index (for example, 1), a value of a second TRP index (for example, 2), and a second TCI state (second DL/UL (joint/separate) TCI state) may correspond to each other.

Note that each of the respective embodiments of the present disclosure described below primarily describes a method in which application of a plurality of TCI states in transmission/reception using a plurality of TRPs is performed for two TRPs (that is, a case where at least one of N and M is 2), but the number of TRPs may be three or more (two or more), and each of the respective embodiments may be applied so as to support the number of TRPs. In other words, at least one of N and M may be a number greater than 2.

In the present disclosure, a joint TCI state, a DL/UL TCI state, a separate TCI state, and a separate DL/UL TCI state may be used interchangeably. An indicated joint TCI state, an indicated DL/UL TCI state, and an indicated TCI state may be used interchangeably.

In the present disclosure, a plurality of TCI states configured by an RRC IE, a plurality of TCI states activated by a MAC CE, information related to one or more TCI states, a TCI state configuration, a TCI state pool, an active TCI state pool, a common TCI state pool, a unified TCI state pool, a TCI state list, a unified TCI state list, a joint TCI state pool, a separate TCI state pool, a separate DL/UL TCI state pool, a DL TCI state pool, a UL TCI state pool, a separate DL TCI state pool, and a separate UL TCI state pool may be used interchangeably.

In the present disclosure, a TRP, a CORESET pool index (CORESETPoolIndex), a TRP ID, an ID related to a TRP, a TAG ID, a group of TCI states, a group of spatial relations, a group of QCL source RSs, a group of DL RSs, a group of path loss RSs, and a PCI (for an inter-cell multi-TRP) may be used interchangeably.

In the present disclosure, being associated with a different TRP, being associated with a different CORESET pool index (CORESETPoolIndex), being associated with a different TRP ID, being associated with a different ID related to a TRP, being associated with a different TAG ID, being associated with a different group of TCI states, being associated with a different group of spatial relations, being associated with a different group of QCL source RSs, being associated with a different group of DL RSs, being associated with a different group of path loss RSs, and being associated with a different PCI (for an inter-cell multi-TRP) may be used interchangeably.

Each embodiment of the present disclosure may be applied to at least one of an intra-cell multi-TRP and an inter-cell multi-TRP.

In the present disclosure, the intra-cell multi-TRP may mean that activated TCI states of a plurality of (for example, two) TRPs are associated with the same PCI.

In the present disclosure, the inter-cell multi-TRP may mean that activated TCI states of a plurality of (for example, two) TRPs are associated with different PCIs.

In the present disclosure, in a case of the inter-cell multi-TRP, a plurality of (for example, two) TRPs may mean a plurality of (for example, two) TRPs associated with a plurality of (for example, two) PCIs.

In the present disclosure, a non-serving cell, an additional cell, a candidate cell, and a target cell may be used interchangeably.

In the present disclosure, a reference cell may be used interchangeably with a specific cell. The reference cell may be, for example, a specific cell, or a cell in which a TA value is indicated/acquired. The reference cell may be defined in a specification or configured/indicated by RRC/MAC CE/DCI from a base station to a UE.

In the present disclosure, a reference TRP may be used interchangeably with a specific TRP.

In the present disclosure, a cell switch command (L1/L2 signal (for example, DCI/MAC CE)), cell switch indication information, and information related to cell switching may be used interchangeably.

The following embodiments may be applied when the RACH procedure of each TRP (or each serving cell/additional cell/non-serving cell) is configured/supported. Alternatively, the following embodiments may be applied when the timing advance/timing advance group of each TRP (or each serving cell/additional cell/non-serving cell) is configured/supported.

The following description may be applied in inter-cell mobility (for example, L1/L2 inter cell mobility) or may be applied in communication control other than inter-cell mobility (for example, intra-cell mobility (L1/L2 intra cell mobility)). L1/L2 inter-cell mobility may be used interchangeably with at least one of cell switching, cell switch, and cell change.

### (Radio Communication Method)

### <Zero-th Embodiment>

A zero-th embodiment relates to a TCI state pool (TCI state configuration) for a candidate cell in LTM. The TCI state pool is based on a unified TCI framework.

Regarding two modes in the unified TCI framework (joint TCI/separate TCI), a UE may support/apply, for application of the TCI state pool, at least one of options below.
Option 1: both of the joint TCI/separate TCI are supported.
Option 2: only one of the modes is supported (for example, only the joint TCI). In this case, a UE capability related to which of the modes is supported may be defined.

For a CC-specific TCI pool and a CC-common TCI pool for CA, options below may be supported.
Option 1: both of the joint TCI/separate TCI are supported.
Option 2: only one of the modes is supported (for example, only the CC-specific TCI pool). In this case, a UE capability related to which of the modes is supported may be defined.

The same configuration may be applied to the candidate cell and a serving cell. For example, when the serving cell is configured with the joint TCI, the candidate cell may also be configured with the joint TCI. When the serving cell is configured with the CC-specific TCI pool, the candidate cell may also be configured with the CC-specific TCI pool.

According to the zero-th embodiment described above, application of a TCI state pool in LTM is made clear.

### <First Embodiment>

A first embodiment relates to a TCI state pool for a candidate cell/serving cell.

For the TCI state pool for the candidate cell/serving cell (for example, a CC-specific TCI pool), a UE may support/apply at least one of options below.
Option 1: a TCI state pool for each candidate cell may be provided under each candidate cell configuration (may be provided, for example, by a higher layer parameter "CellGroupConfig" for each candidate cell). In this case, for each candidate cell, a TCI state ID can start at 0 or 1 (the same TCI state ID can exist for each cell).
Option 2: a TCI state pool for a plurality of/all candidate cells (and serving cells) may be provided in reference configuration. Another TCI state pool may be configured for the plurality of/all candidate cells (and serving cells) (Option 2A/2B). In Option 2A, a TCI state pool for the plurality of/all candidate cells may be configured. In Option 2B, a TCI state pool for the plurality of/all candidate cells and serving cells may be configured.
Option 2-1: TCI states for the plurality of/all candidate cells (and serving cells) may be present in the same TCI state pool (have a different TCI state ID for each cell). Option 2-1 may be a concept similar to a CC enhanced TCI pool. As a variation, the TCI states may be present in the same TCI state pool, for candidate cells on the same frequency. In other words, a TCI state pool may be configured for each frequency.
Option 2-2: a TCI state pool for each candidate cell (and serving cell) may also be provided separately in reference configuration (the same TCI ID can exist for each cell). In other words, signaling architecture is similar to that of Option 1, but a signaling location is different from that of Option 1.
Option 3: a TCI state pool for all candidate cells may be provided in serving cell configuration, in a manner similar to that of ICBM of Rel. 17. (The TCI state pool is present in the same TCI state pool as that for a serving cell, and thus a different TCI ID can actually exist for each cell). Restriction that only a candidate cell on the same frequency as that for a serving cell can have the TCI state pool in serving cell configuration for the same frequency may be added.

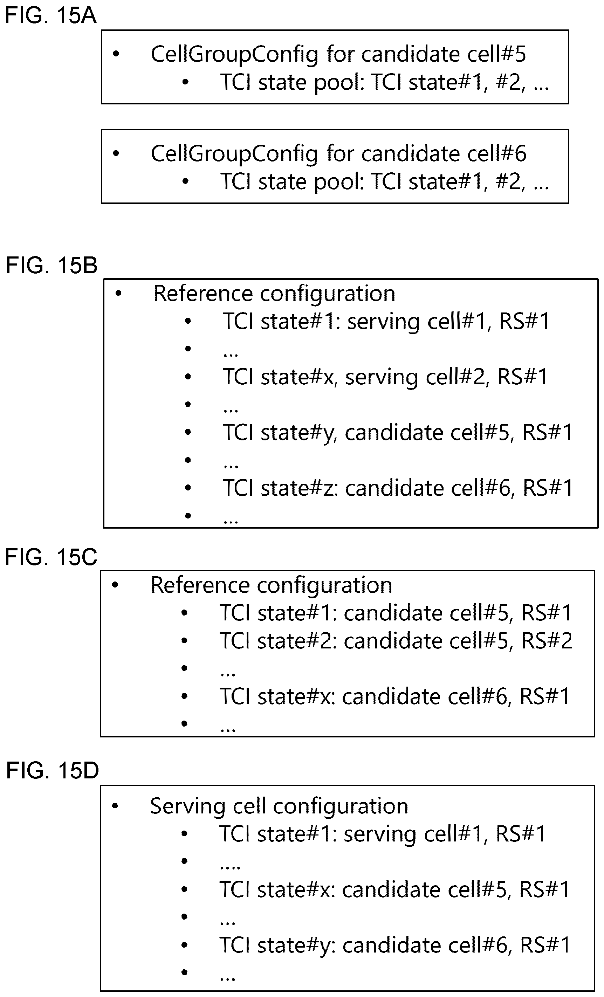

FIGS. 15A to 15D are diagrams to show examples of the TCI state pool according to the first embodiment. Specifically, FIGS. 15A, 15B, 15C, and 15D correspond to Option 1, Option 2-1, Option 2-2, and Option 3 described above, respectively.

According to these options, including a TCI state for a serving cell in a TCI pool allows the UE to use a TCI pool configured by higher layer signaling, in a case where MAC CE-based cell switching is indicated, current serving cell #1 becomes a candidate cell, and original candidate cell #5 becomes a new serving cell, for example. In this case, reconfiguration of the higher layer signaling is unnecessary for a TCI pool for all cells.

In a unified TCI of Rel. 17, a TCI pool can be configured for each BWP of a serving cell. This rule may be reused for the TCI state pool for the serving cell. On the other hand, based on the above-described rule, a TCI state pool different from that for the serving cell may be applied to a candidate cell (for example, for each CellGroupConfig in Option 1). According to this configuration, reusing an existing specification as much as possible reduces the complexity of a specification/implementation.

According to the first embodiment described above, a UE can use an appropriate TCI state pool for a candidate cell/serving cell.

### <Second Embodiment>

A second embodiment relates to a TCI state pool (for example, a CC-common TCI pool) for a candidate cell for CA.

For application of the TCI state pool (for example, the CC-common TCI pool) for the candidate cell for CA, a UE may support/apply at least one of options below.
Option 1: a reference CC/BWP may be indicated for each candidate cell under each candidate cell configuration (may be indicated, for example, by a higher layer parameter "CellGroupConfig" for each candidate cell). The reference CC/BWP may be a serving cell or a candidate cell. For a candidate cell as a reference cell, the TCI state pool may be configured under candidate cell configuration.
Option 2: a reference CC/BWP may be indicated for each candidate cell provided in reference configuration. The reference CC/BWP may be a serving cell or a candidate cell. For a candidate cell (and a serving cell) as a reference cell(s), the TCI state pool may be configured under candidate cell configuration.
Option 2-1: TCI states for all reference cells may be present in the same TCI state pool (in this case, each reference cell may have a different TCI state ID ). As a variation, the TCI states may be present in the same TCI state pool, for candidate cells on the same frequency. In other words, a TCI state pool may be configured for each frequency.
Option 2-2: a TCI state pool may be provided additionally for each reference cell.
Option 3: a reference CC/BWP may be indicated for each candidate cell provided in a serving cell. The reference CC/BWP may be a serving cell or a candidate cell. A TCI state pool for a candidate cell that becomes a reference cell is configured by serving cell configuration. Restriction that only a candidate cell on the same frequency as that for a serving cell can have the TCI state pool in serving cell configuration for the same frequency may be added.

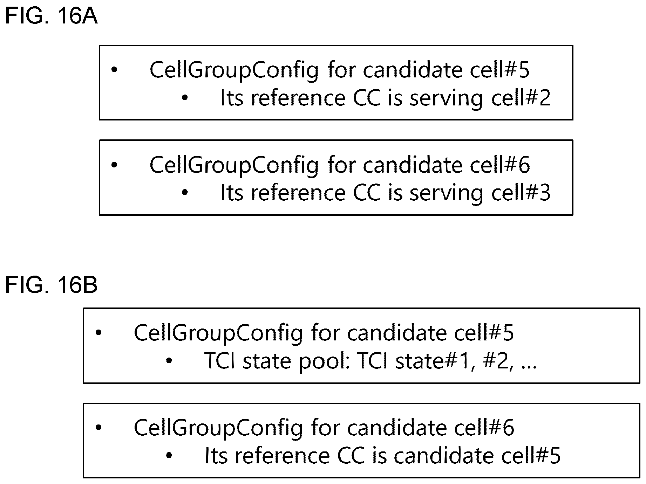

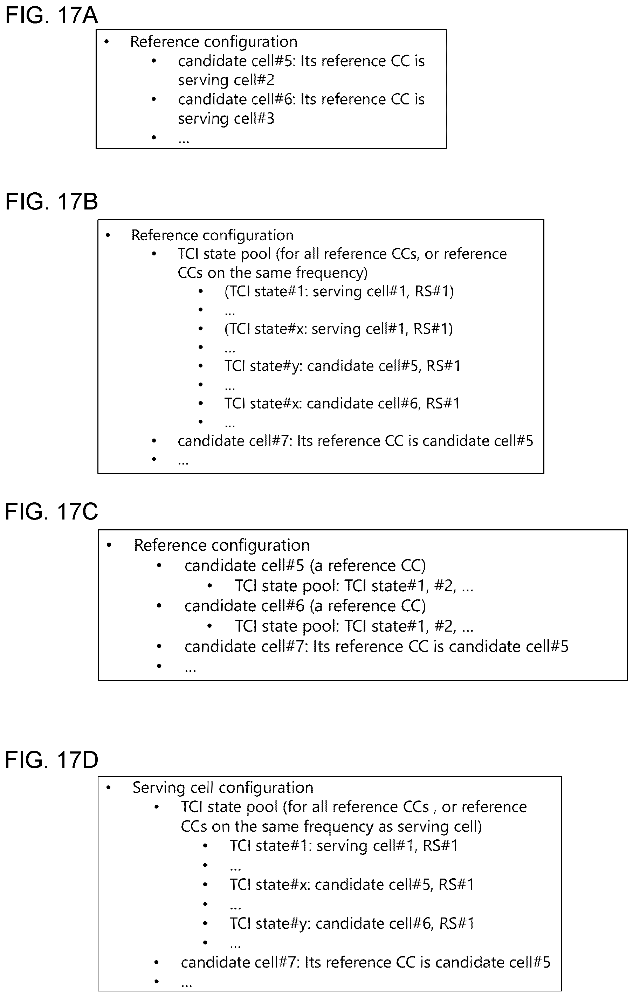

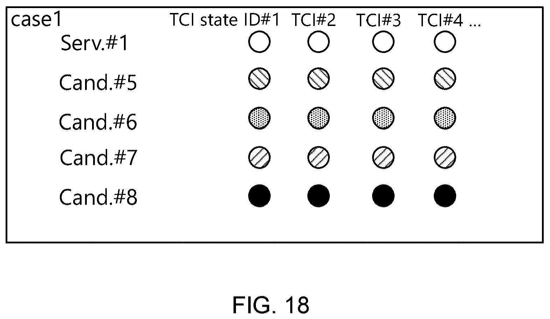

FIGS. 16A to 16B and FIGS. 17A to 17D are diagrams to show examples of the TCI state pool according to the second embodiment. Specifically, FIGS. 16A to 16B, 17A, 17B, 17C, and 17D correspond to Option 1, Option 2, Option 2-1, Option 2-2, and Option 3 described above, respectively. In the first/second embodiment, TCI state pools of FIGS. 18 to 24 described below may be applied.

In Rel. 17, when a list of TCI states is not configured by a higher layer parameter "PDSCH-config" (corresponding to a joint/DL TCI)/"BWP-UplinkDedicated" (corresponding to a UL TCI), a reference BWP ID (unifiedTCI-StateRef-r17 ServingCellAndBWP-Id-r17) is explicitly configured, which allows a BWP (without a configured TCI state) to follow TCI state configuration for a reference BWP. The rule may be reused for the second embodiment (Options 1 to 3). According to this configuration, reusing an existing specification as much as possible reduces the complexity of a specification/implementation.

According to the second embodiment described above, a UE can use an appropriate TCI state pool for a candidate cell/serving cell.

### <Third Embodiment>

A third embodiment relates to a method of activating a TCI state for a candidate cell by using a MAC CE. FIGS. 18 to 24 are diagrams to show examples of a TCI state pool according to a specific case of the present disclosure, and correspond to cases 1 to 7, respectively.

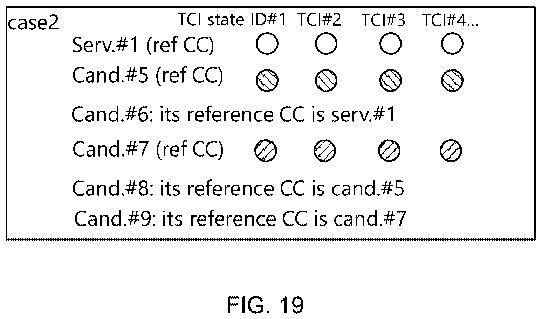

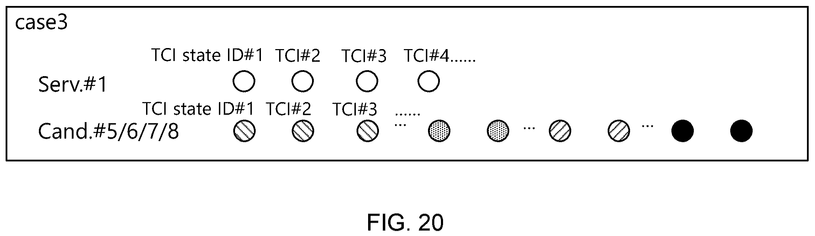

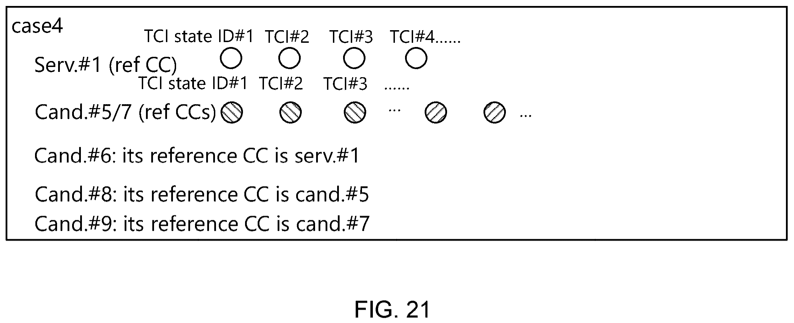

A UE may, when activating a TCI state pool (TCI state configuration) for candidate cells by using a MAC CE, apply at least one of the following. In other words, for activation of the TCI state pool (TCI state configuration), a MAC CE described below may be transmitted to/received by the UE.
Alt 1: for respective serving cells/candidate cells, a MAC CE for unified TCI state activation/deactivation may be transmitted to/received by the UE to activate a TCI state for each cell (for example, case 1 of FIG. 18 or case 2 of FIG. 19). Specifically, in case 1 of FIG. 18, up to eight TCI states may be activated for each of serving cell #1 and candidate cells #5 to #8 by using one MAC CE. In case 2 of FIG. 19, up to eight TCI states may be activated for each of serving cell #1 and candidate cells #5 and #7 by using one MAC CE. In other words, in Alt 1, one MAC CE and one serving cell/candidate cell may be associated with each other.
Alt 1-1: a serving cell ID field may be enhanced to indicate IDs of a serving cell and a candidate cell.
Alt 1-2: an R field (reserved bit field) may be enhanced to indicate either a serving cell or a candidate cell. When "R" indicates a candidate cell, the serving cell ID field may be interpreted as a candidate cell ID.
Alt 1-3: a MAC CE may be enhanced to simultaneously activate TCI states for a plurality of serving cells/candidate cells. In this case, a maximum number of TCI states activated for each candidate cell (for all candidate cells, or for all serving cells/candidate cells, for each frequency/frequency band/UE) may be limited, for example, by a UE capability.
Alt 2: TCI states for a plurality of cells (all candidate cells) (for example, case 3 of FIG. 20 or case 4 of FIG. 21) may be activated by using one MAC CE. Alternatively, TCI states for a plurality of cells may be activated for each frequency by using one MAC CE.

For example, in case 3 of FIG. 20, up to eight TCI states and up to eight TCI states may be activated for serving cell #1 and candidate cells #5 to #8, respectively, by using one MAC CE. In case 4 of FIG. 21, up to eight TCI states and up to eight TCI states may be activated for serving cell #1 and candidate cells #5 and #7, respectively, by using one MAC CE. In other words, in Alt 2, one MAC CE and a plurality of serving cells/candidate cells may be associated with each other.

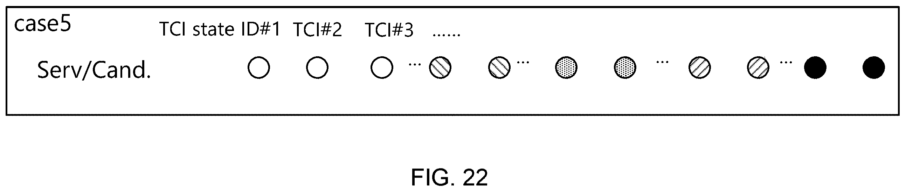

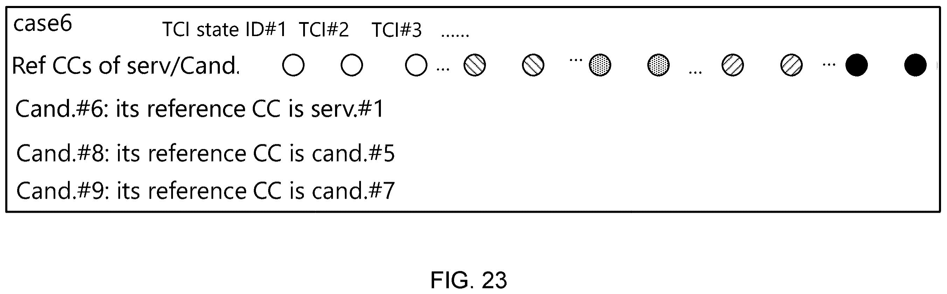

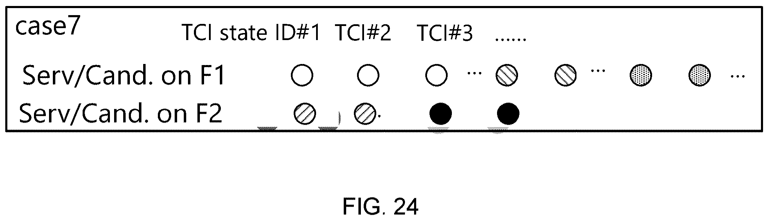

In cases of FIGS. 20 and 21, a TCI state ID already includes information related to a candidate cell ID. Thus, it is unnecessary to indicate a serving cell ID by using a MAC CE. For example, up to X TCI states over M candidate cells may be indicated/activated by a MAC CE. Here, X/M may be defined in a specification or may follow a UE capability.
Alt 3: TCI states for a plurality of cells (all serving cells and all candidate cells (or for each frequency) may be activated by using one MAC CE (for example, case 5 of FIG. 22/case 6 of FIG. 23/case 7 of FIG. 24).

For example, in case 5 of FIG. 22, up to eight TCI states may be activated for all cells (serving cell #1 and candidate cells #5 to #8) by using one MAC CE. In case 6 of FIG. 23, up to eight TCI states may be activated for reference CCs associated with serving cells/candidate cells, by using one MAC CE. In case 7 of FIG. 24, up to eight TCI states and up to eight TCI states may be activated for serving cells/candidate cells on F1 (FR1) and serving cells/candidate cells on F2 (FR2), respectively, by using one MAC CE. In other words, in Alt 3, one MAC CE and a plurality of serving cells/candidate cells may be associated with each other.

For example, up to Y TCI states over N cells (or reference CCs) may be indicated/activated by a MAC CE. Y/N may be defined in a specification or may follow a UE capability.

In addition to Alt 1/2/3 described above, when a TCI state pool includes a reference CC, only a TCI state for the reference CC may be indicated/activated by a MAC CE. For CCs in the same CC list (for example, simultaneousU-TCI-UpdateList, or sharing the same reference CC), a MAC CE may be applied to all the serving cells/candidate cells in the CC list.

In a case of a MAC CE for cell switch command, an indicated TCI state for an indicated destination candidate cell may be indicated/configured by a MAC CE for activating a TCI state for a target candidate cell.

Before cell switching, TCI state configuration/activation by higher layer signaling/MAC CE may be supported for only some candidate cells. In this case, a target of the application may be only candidate cells in a frequency. The number of such candidate cells, and the number of TCI states configured/activated for each cell/for cells may follow a UE capability per frequency/frequency band/UE.

### <Variations>

For example, in FIG. 18, up to eight TCI states may be activated for serving cell #1 by one MAC CE. In this case, candidate cells #5 to #8 may be collectively activated with up to eight TCI states by one MAC CE. In FIG. 18, serving cell #1 and candidate cells #5 to #8 may be collectively activated with up to eight TCI states by one MAC CE.

In FIG. 19, up to eight TCI states may be activated for serving cell #1 by one MAC CE. In this case, candidate cells #5 and #7 may be collectively activated with up to eight TCI states by one MAC CE. In FIG. 19, serving cell #1 and candidate cells #5 and #7 may be collectively activated with up to eight TCI states by one MAC CE.

In FIG. 20, serving cell #1 and candidate cells #5 to #8 may be collectively activated with up to eight TCI states by one MAC CE.

In FIG. 21, serving cell #1 and candidate cells #5 to #8 may be collectively activated with up to eight TCI states by one MAC CE.

In FIG. 22, up to eight TCI states may be activated over a plurality of cells (serving cells/candidate cells) by one MAC CE.

In FIG. 23, up to eight TCI states may be activated over a plurality of cells (serving cells/candidate cells) by one MAC CE. In FIG. 23, the indicated TCI state for serving cell #1 may also be applied to candidate cell #6. In FIG. 23, the indicated TCI state for candidate cell #5 may also be applied to candidate cell #8. In FIG. 23, the indicated TCI state for candidate cell #7 may also be applied to candidate cell #9.

In FIG. 24, up to eight TCI states may be activated over a plurality of cells (serving cells/candidate cells) corresponding to F1 (FR1)/F2 (FR2) by one MAC CE.

According to the third embodiment described above, a UE can appropriately activate a TCI state for a candidate cell by using a MAC CE.

### <Fourth Embodiment>

A fourth embodiment relates to application of an indicated TCI state by a cell switch command.

As described above, an indicated TCI state based on a MAC CE/DCI may be applied to the following channels/RSs.
{PDCCH}
{PDSCH}
{CSI-RS}
{PUSCH}
{SRS}

In this manner, the cell switch command can indicate a beam/TCI state for a target candidate cell. For this case, studies will be made on channels/RSs to which the indicated TCI state is to be applied.

Unlike the unified TCI framework of Rel. 17, the indicated beam/TCI state with the cell switch command may be applied to almost all channels/RSs for an indicated target cell, such as CORESET #0, another CSS, a USS, a UE-dedicated PDSCH, a non-UE-dedicated PDSCH, an A-CSI-RS for CSI acquisition or beam management, all dedicated PUCCH resources, a dynamic/configured grant PUSCH, an A-SRS for beam management, an A/SP/P-SRS for codebook/non-codebook, and antenna switch usage. A UE may apply the indicated TCI state to the channels/RSs in response to confirmation of the cell switch command.

Alternatively, the UE may apply the indicated TCI state to the following channels/RSs.
CORESET #0, a CSS of a type other than CSS type 3, a non-UE-dedicated PDSCH, a P-CSI-RS, an SP-CSI-RS, a P-SRS, and an SP-SRS for beam management.

### <Variations>

Regarding a certain channel/RS, a new parameter "followUnifiedTCIstate-LTM" may be configured for each candidate cell. Alternatively, whether the beam/TCI state indicated by the cell switch command can be applied to those channels/RSs may be indicated.

According to the fourth embodiment described above, a UE can appropriately control application of an indicated TCI state by a cell switch command.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information for at least one of the embodiments above
- supporting of L1/L2 intra-cell mobility/L1/L2 inter-cell mobility
- supporting of a TA for each TRP in intra-cell/inter-cell multi-TRP
- supporting of configuration of intra-cell/inter-cell multi-TRP for a serving cell/non-serving cell
- supporting of change of a frame timing for a reference cell
- supporting of PDCCH monitoring for a candidate cell/inactive candidate cell/inactive SCell
- supporting of a maximum number of cells/TAGs/reference CCs as a target of PDCCH monitoring
- supporting of a cross-carrier (cross-CC) PDCCH order
- supporting of monitoring of an RAR for a candidate cell in a candidate cell/SpCell/SCell
- supporting of a maximum number of candidate cells/SpCells/SCells as a target of PDCCH monitoring
- supporting of performance of a set of specific functions/procedures in candidate cells (or inactive cells) before receiving an L1/L2 cell switch command and supporting of a maximum number of such cells

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of random access procedure/PRACH transmission without RAR monitoring, any RRC parameter for a specific release (for example, Rel. 18/19), or the like.

In a case where the UE does not support at least one of the specific UE capability or is not configured with the specific information, the UE may apply, for example, Rel-15/16 operation.

### (Supplementary Notes)

Regarding one embodiment of the present disclosure, the following supplementary notes of the invention will be given.

### {Supplementary Note 1}

A terminal including:
a receiving section that receives a Medium Access Control Control Element (MAC CE) related to cell switching; and
a control section that controls, based on information included in the MAC CE, application of a transmission configuration indication (TCI) state for a specific cell, wherein
the MAC CE includes information related to a TCI state pool for a serving cell or a candidate cell.

### {Supplementary Note 2}

The terminal according to supplementary note 1, wherein the control section judges, for each MAC CE, a TCI state for one serving cell or candidate cell.

### {Supplementary Note 3}

The terminal according to supplementary note 1 or 2, wherein the control section judges, for each MAC CE, a TCI state for a plurality of serving cells or candidate cells.

### {Supplementary Note 4}

The terminal according to any one of supplementary notes 1 to 3, wherein the TCI state pool is associated with at least one of a unified TCI state, a component carrier (CC)-specific TCI pool, and a CC-common pool.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

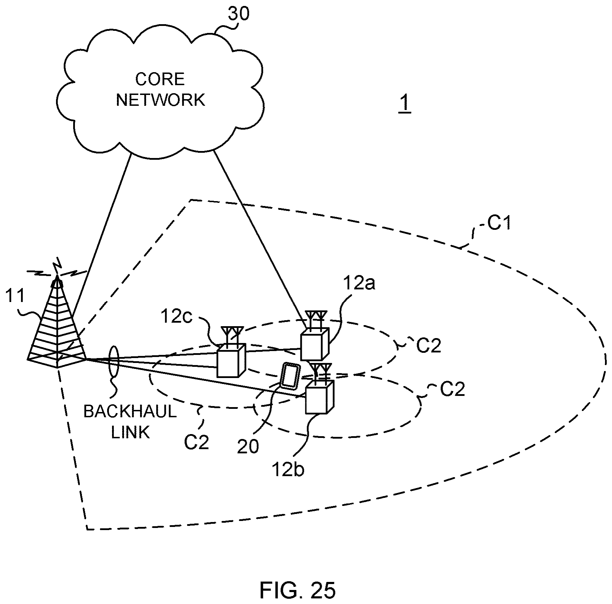

FIG. 25 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

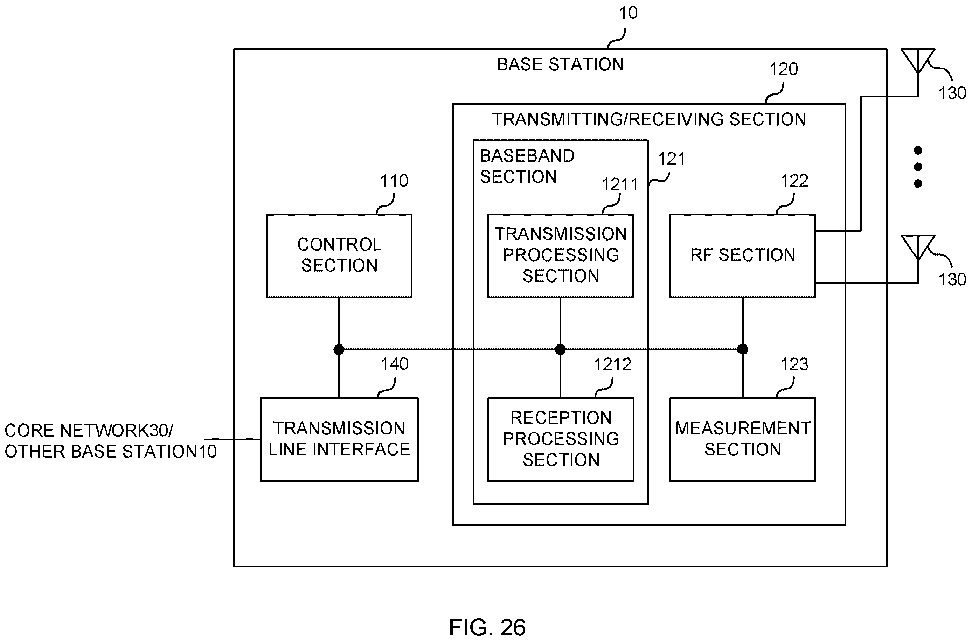

FIG. 26 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The control section 110 may perform, for application of a transmission configuration indication (TCI) state for a specific cell performed by a terminal, control so as to transmit the MAC CE including information related to a TCI state pool for a serving cell or a candidate cell.

### (User Terminal)

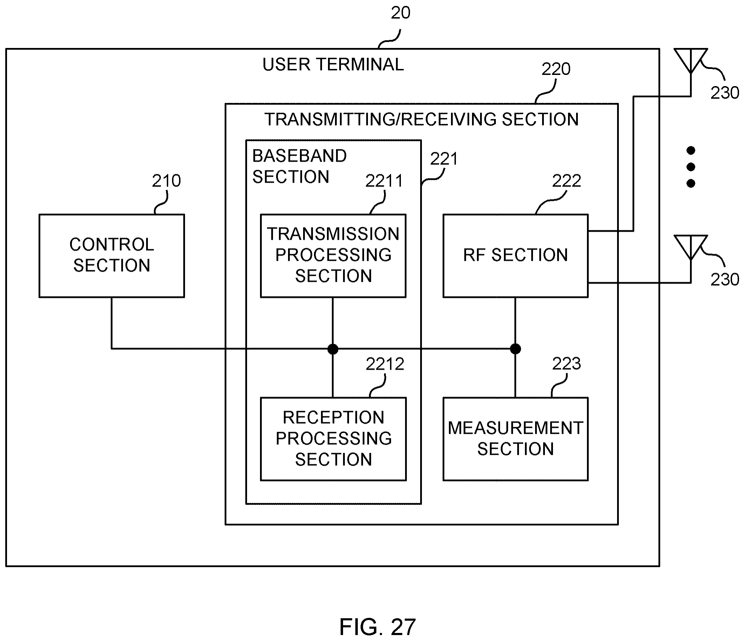

FIG. 27 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a channel measurement resource. The channel measurement resource may be, for example, a non-zero power (NZP) CSI-RS resource. The measurement section 223 may derive interference measurement for CSI computation, based on an interference measurement resource. The interference measurement resource may be at least one of an NZP CSI-RS resource for interference measurement, a CSI-interference measurement (IM) resource, and the like. Note that the CSI-IM may be referred to as CSI-interference management (IM), and may be interpreted as a zero power (ZP) CSI-RS, and vice versa. Note that, in the present disclosure, CSI-RS, NZP CSI-RS, ZP CSI-RS, CSI-IM, CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a Medium Access Control Control Element (MAC CE) related to cell switching. The MAC CE may include information related to a TCI state pool for a serving cell or a candidate cell. The TCI state pool may be associated with at least one of a unified TCI state, a component carrier (CC)-specific TCI pool, and a CC-common pool.

The control section 210 may control, based on information included in the MAC CE, application of a transmission configuration indication (TCI) state for a specific cell. The control section 210 may judge, for each MAC CE, a TCI state for one serving cell or candidate cell. The control section 210 may judge, for each MAC CE, a TCI state for a plurality of serving cells or candidate cells.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

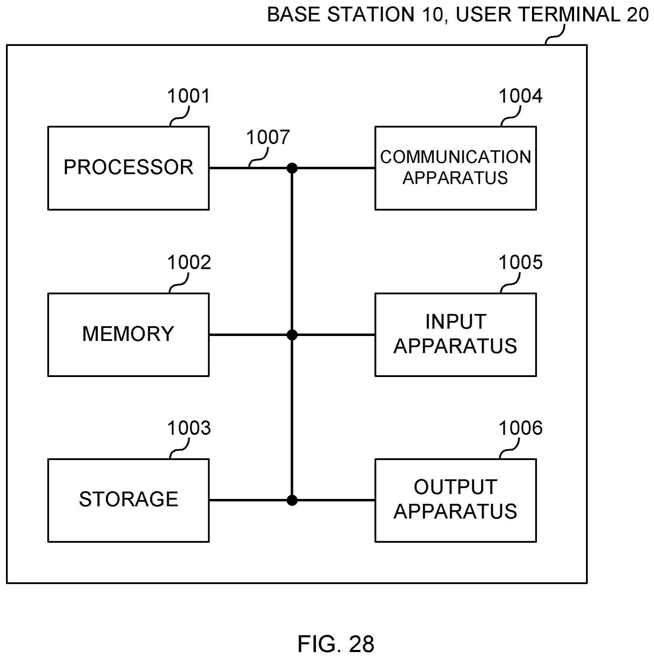

For example, a base station, a user terminal, and so on according to one embodiment of the present disclosure may function as a computer that executes the processes of the radio communication method of the present disclosure. FIG. 28 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an autonomous car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

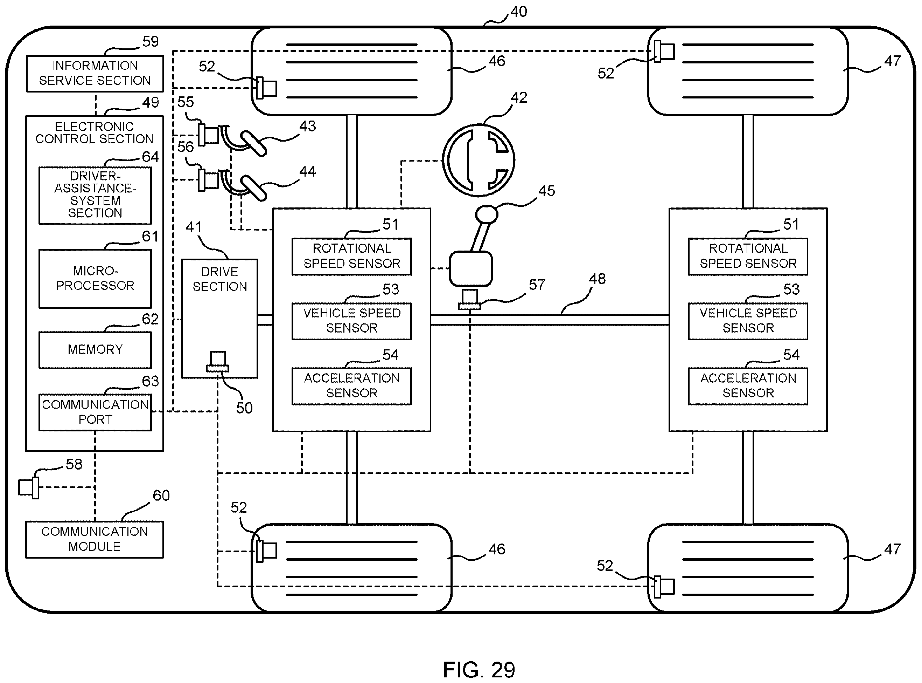

FIG. 29 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the drive section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "decisions(determinations)" about resolving, selecting, choosing, establishing, comparing, and so on. In other words, " judging (determining)" may be interpreted to mean making "decisions (determinations)" about some action. In the present disclosure, "judge/ judging (determine/determining)" may be interchangeably interpreted as the above-described actions.

In the present disclosure, "judge/judging (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-029598, filed on February 28, 2023, the contents of which are incorporated herein by reference in their entirety.

## Claims

1. A terminal comprising:
a receiving section that receives a Medium Access Control Control Element (MAC CE) related to cell switching; and
a control section that controls, based on information included in the MAC CE, application of a transmission configuration indication (TCI) state for a specific cell, wherein
the MAC CE includes information related to a TCI state pool for a serving cell or a candidate cell.

2. The terminal according to claim 1, wherein
the control section judges, for each MAC CE, a TCI state for one serving cell or candidate cell.

3. The terminal according to claim 1, wherein
the control section judges, for each MAC CE, a TCI state for a plurality of serving cells or candidate cells.

4. The terminal according to claim 1, wherein
the TCI state pool is associated with at least one of a unified TCI state, a component carrier (CC)-specific TCI pool, and a CC-common pool.

5. A radio communication method for a terminal, the radio communication method comprising:
receiving a Medium Access Control Control Element (MAC CE) related to cell switching; and
controlling, based on information included in the MAC CE, application of a transmission configuration indication (TCI) state for a specific cell, wherein
the MAC CE includes information related to a TCI state pool for a serving cell or a candidate cell.

6. A base station comprising:
a transmitting section that transmits a Medium Access Control Control Element (MAC CE) related to cell switching; and
a control section that performs, for application of a transmission configuration indication (TCI) state for a specific cell performed by a terminal, control to transmit the MAC CE including information related to a TCI state pool for a serving cell or a candidate cell.
